# FASCICULE DE BREVET EUROPEEN

(11) **EP 4 505 163 B1**
(45) Date de publication et mention de la délivrance du brevet: **11.11.2026**
(21) Numéro de dépôt: 23716519.6
(22) Date de dépôt: 31.03.2023
(51) Int. Cl.: G01N 21/64, G02B 21/00, G02B 21/36

(54) **PROCÉDÉS D'IMAGERIE MICROSCOPIQUE DE FLUORESCENCE ET DISPOSITIFS DE CORRECTION DE FRONT D'ONDE POUR LA MISE EN OEUVRE DE TELS PROCÉDÉS**
FLUORESZENZMIKROSKOPIEBILDGEBUNGSVERFAHREN UND WELLENFRONTKORREKTURVORRICHTUNGEN ZUR IMPLEMENTIERUNG SOLCHER VERFAHREN
FLUORESCENCE MICROSCOPY IMAGING METHODS AND WAVEFRONT-CORRECTING DEVICES FOR IMPLEMENTING SUCH METHODS

(30) Priorité: 04.04.2022 FR 2203064
(43) Date de publication de la demande: 12.02.2025
(73) Titulaire: Imagine Optic, 91400 Orsay (FR); Ecole Supérieure de Physique et de Chimie Industrielles de la Ville de Paris, 75005 Paris (FR); Centre National de la Recherche Scientifique, 75016 Paris (FR); SORBONNE UNIVERSITE, 75006 Paris (FR); PARIS SCIENCES ET LETTRES, 75006 Paris (FR)
(72) Inventeur: HARMS, Fabrice, 91400 ORSAY (FR); LEVECQ, Xavier, 91190 Gif-Sur-Yvette (FR); FRAGOLA, Alexandra, 91400 ORSAY (FR)
(74) Mandataire: Osha BWB
(86) Numéro de dépôt international: PCT/EP2023/058579
(87) Numéro de publication internationale: WO 2023/194263

(56) Documents cités:
- WO-A1-2020/157265
- L. SILVESTRI ET AL: "Confocal light sheet microscopy: micron-scale neuroanatomy of the entire mouse brain", OPTICS EXPRESS, vol. 20, no. 18, 27 August 2012 (2012-08-27), pages 20582, XP055348754, DOI: 10.1364/OE.20.020582
- OLARTE O E ET AL: "Light-sheet microscopy: A tutorial", ADVANCES IN OPTICS AND PHOTONICS 20180331 OSA - THE OPTICAL SOCIETY USA, vol. 10, no. 1, 31 March 2018 (2018-03-31), pages 111 - 179, XP093003997, DOI: 10.1364/AOP.10.000111
- HUBERT ANTOINE ET AL: "Adaptive optics light-sheet microscopy based on direct wavefront sensing without any guide star", OPTICS LETTERS, vol. 44, no. 10, 15 May 2019 (2019-05-15), US, pages 2514, XP093060181, ISSN: 0146-9592, DOI: 10.1364/OL.44.002514

## Description

### Domaine technique de l'invention

La présente description concerne des procédés d'imagerie microscopique de fluorescence avec éclairage par feuille de lumière, des dispositifs de correction de front d'onde adaptés à la mise en œuvre de tels procédés, des systèmes d'imagerie microscopique comprenant de tels dispositifs de correction de front d'onde.

### Etat de la technique

En imagerie microscopique, notamment à haute résolution, la qualité de l'image en termes de résolution et de contraste est directement liée au front d'onde incident sur le détecteur d'imagerie, par exemple une caméra. Le front d'onde, c'est-à-dire la surface d'égale phase d'une onde est, dans un système d'imagerie microscopique, perturbé à la fois par les défauts optiques introduits par des éléments optiques du système d'imagerie, comme par exemple des défauts de réalisation des éléments optiques, des défauts d'alignement, des variations d'indice de réfraction entre le milieu d'immersion de l'objectif de microscope et l'objet, et par l'objet lui-même. Ceci est particulièrement vrai dans le cas d'objets biologiques transparents ou partiellement transparents, lors de la réalisation d'une image correspondant à un plan en profondeur dans l'objet ; en effet, dans les objets biologiques, la répartition spatiale de l'indice de réfraction est inhomogène à l'échelle microscopique du fait de la complexité des structures biologiques. Les rayons issus de différents points d'un plan en profondeur dans l'objet sont donc perturbés par les couches successives traversées dans l'objet. Le front d'onde issu de chacun de ces points est ainsi différent d'un front d'onde de référence, par exemple un front d'onde plan ou sphérique et l'image microscopique correspondante est dégradée en conséquence. L'optique adaptative (OA) est une technique permettant de modifier dynamiquement un front d'onde, et, en particulier lorsque la technique est utilisée dans un système d'imagerie, de corriger les éventuels défauts du front d'onde en chaque point de manière à restaurer la qualité des images produites par ledit système. Lorsqu'elle est employée en imagerie microscopique, l'OA permet d'améliorer de façon significative les performances d'imagerie en corrigeant au moins une partie des défauts optiques introduits par le système optique et l'objet d'intérêt, selon diverses mises en œuvre particulières, telles que décrites par exemple dans « Adaptive optics for fluorescence microscopy », de M. J. Booth *et al.* [Réf 1].

Les méthodes de mise en œuvre de l'OA en imagerie microscopique développées jusqu'à ce jour reposent toutes sur l'usage d'un dispositif de correction du front d'onde permettant de modifier localement la phase d'une onde optique. Parmi les dispositifs de correction, on connaît par exemple les miroirs déformables, les modulateurs à cristaux liquides (ou SLM pour « Spatial Light Modulator »), ou encore des lentilles déformables. Un miroir déformable par exemple comprend une membrane réfléchissante et un ensemble d'actionneurs permettant de déformer localement la membrane de manière contrôlée.

Les méthodes de mise en œuvre de l'OA en imagerie microscopique diffèrent cependant quant aux méthodes de mesure des défauts optiques, en vue de la correction. On peut distinguer deux grandes catégories pour la mesure des défauts optiques : les méthodes de mesure indirecte basées sur l'analyse de l'image produite par le microscope au moyen de critères de qualité représentatifs de la qualité du front d'onde ayant conduit à la formation de ladite image, et les méthodes de mesure directe des défauts optiques au moyen d'analyseurs de front d'onde, par exemple des analyseurs de type Shack-Hartmann.

La première approche (mesure indirecte) permet une mise en œuvre instrumentale simplifiée - et donc moins coûteuse - du fait de l'absence d'analyseur de front d'onde. Cependant, elle est basée sur une optimisation globale nécessitant l'usage d'algorithmes itératifs, dont la robustesse de convergence, la vitesse d'exécution et la calibration sont limitants, en particulier dans le cas de l'imagerie dynamique d'objets vivants.

Ainsi, notamment pour l'imagerie microscopique d'objets biologiques, les méthodes basées sur la mesure directe des défauts optiques couplée à une correction de front d'onde, ont démontré leur capacité à obtenir une très bonne correction des défauts optiques introduits par le système d'imagerie et l'objet, et une amélioration substantielle du contraste et de la résolution des images. De telles méthodes sont décrites par exemple dans l'article de revue de N. Ji « Adaptive optical fluorescence microscopy » [Réf. 2].

Cependant l'approche de mesure directe des défauts optiques reste complexe dans sa mise en œuvre ; en effet, il est généralement nécessaire de disposer pour cette mesure d'un « point source » émettant un front d'onde unique. Aujourd'hui, les approches les plus efficaces consistent à induire ou à isoler optiquement un volume émetteur de lumière (également appelé « étoile artificielle ou « guide star ») au sein de l'image. Selon un premier exemple, l'étoile artificielle est créée par l'emploi de billes fluorescentes, de taille sensiblement égale à la limite de diffraction de l' objectif de microscope utilisé, placées dans l'objet d'intérêt, comme décrit dans le brevet US855730 B2 [Réf. 3], ce qui nécessite une modification substantielle de l'objet. Selon un second exemple décrit dans la demande de brevet publiée US 2015/0362713 [Réf. 4], l'étoile artificielle est créée à l'aide d'un laser ultrabref générant localement dans l'objet d'intérêt un volume d'émission de fluorescence à 2 photons.

Ces approches imposent ainsi une mise en œuvre complexe en imagerie microscopique, que ce soit d'un point de vue de la préparation de l'objet d'intérêt ou du design instrumental. De plus, l'utilisation d'un point source comme source de front d'onde rend la mesure des défauts optiques induites par l'objet - et donc la correction par OA correspondante - valide uniquement sur un champ limité par le domaine d'isoplanétisme de l'objet, c'est-à-dire le champ au niveau du plan d'imagerie de l'objet pour lequel les défauts optiques varient de manière suffisamment faible pour que l'image correspondante ne montre aucune dégradation significative. Or la majorité des objets biologiques d'intérêt en microscopie de haute résolution sont constitués de multiples structures microscopiques correspondant à des fluctuations de phase significatives : le domaine d'isoplanétisme est en général limité à une centaine de microns carré, ce qui représente une limitation importante pour l'étude à forte résolution spatio-temporelle de structures larges, comme par exemple l'étude de réseaux neuronaux dans le domaine de la neuroimagerie.

Très récemment, il a été proposé dans un système d'imagerie microscopique avec éclairage par « feuille de lumière » (ou « *light sheet microscopy* » selon l'expression anglo-saxonne), une méthode d'OA qui s'affranchit de l'utilisation d'un point source pour la mesure des défauts optiques. Une telle méthode est décrite dans l'article de K. Lawrence et al. « Scene-based Shack-Hartmann wavefront sensorfor light-sheet microscopy » [Réf. 5]. Pour cela, il est proposé un analyseur de front d'onde de type Shack-Hartmann dans lequel chaque microlentille de l'analyseur forme une image d'un objet étendu, d'où l'appellation de dispositif d'analyse de front d'onde à source étendue. L'analyse du front d'onde est faite au moyen d'opérations de corrélations croisées ou « intercorrélations » entre les images formées par les différentes microlentilles, permettant d'obtenir une carte bidimensionnelle des gradients locaux (ou pentes locales) du front d'onde.

Encore plus récemment, il a été proposé un système d'imagerie microscopique de fluorescence avec éclairage par feuille de lumière comprenant un dispositif d'analyse de front d'onde à source étendue amélioré. Voir la demande de brevet publiée WO2020/157265 [Réf. 6] ou l'article de A. Hubert et al. [Réf. 11]. Le dispositif d'analyse de front d'onde décrit dans [Réf. 6] comprend notamment un détecteur bidimensionnel avec un plan de détection et un arrangement bidimensionnel de microlentilles agencé dans un plan d'analyse, chaque microlentille étant configurée pour former sur le plan de détection, lorsque le dispositif d'analyse est connecté au système d'imagerie microscopique, une image d'un objet situé dans un plan focal de l'objectif de microscope, avec un champ d'analyse donné. Le dispositif d'analyse de front d'onde comprend en outre un diaphragme de champ conjugué optiquement avec le plan de détection du détecteur bidimensionnel, le diaphragme de champ permettant de limiter le champ d'analyse de chaque microlentille.

Le dispositif d'analyse de front d'onde décrit dans [Réf. 6] permet par rapport aux dispositifs connus de l'état de l'art une très forte amélioration de la précision de l'analyse, tout en s'affranchissant de la génération d'une étoile artificielle. En effet, le diaphragme de champ ainsi agencé dans le dispositif d'analyse de front d'onde permet de contrôler la taille de l'image formée par chaque microlentille au niveau du plan de détection et de limiter le recouvrement entre deux images formées par deux microlentilles adjacentes, sans limiter pour autant la taille du champ imagé par le système d'imagerie microscopique auquel ledit dispositif d'analyse du front d'onde est connecté.

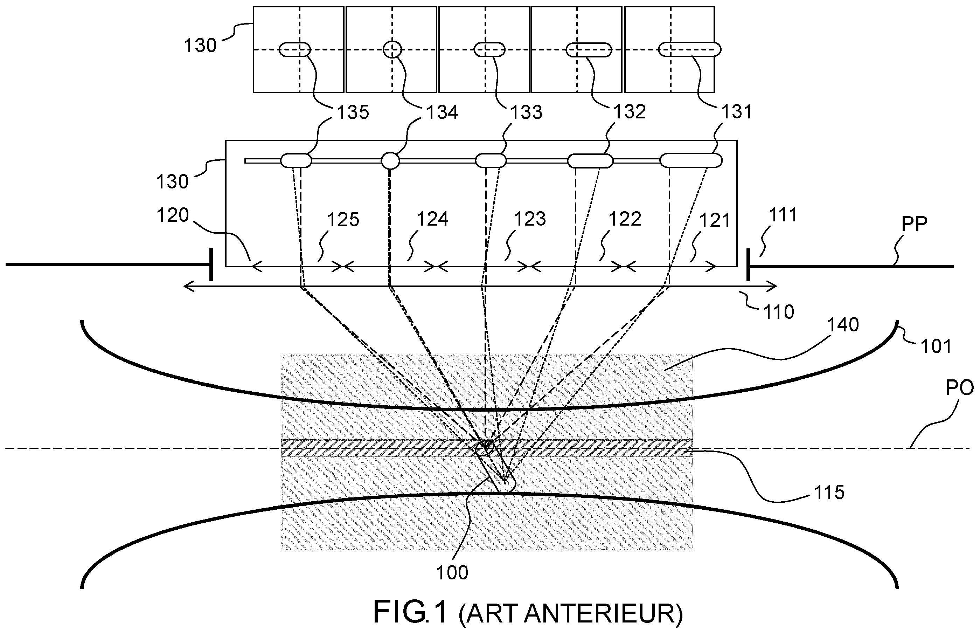

Les déposants ont cependant mis en évidence une limitation supplémentaire lors de l'utilisation d'un dispositif d'analyse de front d'onde à source étendue tel que décrit dans [réf. 6], cette limitation supplémentaire étant expliquée au moyen de la Fig. 1. La Fig. 1 illustre de façon très schématique un dispositif d'analyse de front d'onde comprenant une matrice 120 de microlentilles, quelques-unes des microlentilles (121 - 125) étant représentées, le dispositif d'analyse de front d'one étant agencé en sortie d'un objectif de microscope 110 comprenant une pupille de sortie 111 dans un plan pupillaire PP. Les microlentilles sont agencées dans un plan pupillaire conjugué optiquement avec le plan pupillaire PP et sont configurées pour générer dans un plan de détection 130 d'un détecteur bidimensionnel du dispositif d'analyse de front d'onde des images 131 - 135 d'un objet 100 qui intercepte un plan objet PO de l'objectif de microscope. Sur la Fig. 1, le plan des microlentilles est représenté confondu avec le plan pupillaire PP par souci de simplification.

Comme illustré sur la Fig. 1, la grande majorité des systèmes d'imagerie microscopique de fluorescence avec éclairage par feuille de lumière génèrent une feuille de lumière 101 dont l'épaisseur sur un champ de vue large est grande, notamment supérieure à la profondeur de champ de l' objectif de microscope sur le champ de vue complet de l'objectif de microscope, ladite profondeur de champ étant repérée par la bande 115 sur la Fig. 1. Il est en effet connu, pour obtenir une feuille de lumière d'épaisseur sensiblement constante sur un champ de vue large, de créer cette feuille de lumière par l'intermédiaire d'un système optique d'ouverture numérique faible, plus faible que l'ouverture numérique de l'objectif d'imagerie, comme décrit par exemple dans [Réf. 7], pp. 122-125. De plus, dans le cas d'échantillons diffusants, ce qui est le cas des objets biologiques dans des proportions diverses, l'épaisseur effective de la feuille de lumière est augmentée du fait de la diffusion.

Or chaque microlentille présente une ouverture numérique inférieure à l'ouverture numérique de l'objectif de microscope du système d'imagerie microscopique. Par exemple, pour un dispositif de mesure du front d'onde comprenant un arrangement bidimensionnel de 100 microlentilles interceptant la pupille de l'objectif de microscope du système d'imagerie microscopique, l'ouverture numérique de chaque microlentille sera 10 fois inférieure à celle de l'objectif de microscope si la focale de chaque microlentille est similaire à la focale de l'objectif de microscope. Par conséquent, la profondeur de champ de chaque microlentille (représentée par la bande 140 sur la Fig. 1) est significativement supérieure à la profondeur de champ de l'objectif de microscope, 100 fois supérieure dans l'exemple précité, l'ouverture numérique et la profondeur de champ étant reliées selon la formule suivante : [Math 1] $DOF = \frac{λ}{{NA}^{2}}$ où λ représente la longueur d'onde d'imagerie, NA représente l'ouverture numérique et DOF représente la profondeur de champ.

Ainsi, lorsque le dispositif de mesure de front d'onde à source étendue est connecté à un système d'imagerie microscopique de fluorescence avec éclairage par feuille de lumière, comme cela est illustré sur la Fig. 1, chaque microlentille effectue une image correspondant typiquement à toute l'épaisseur de la feuille de lumière, c'est-à-dire effectue une projection dans un plan de tous les photons fluorescents issus de la feuille de lumière. Il en résulte que le calcul d'intercorrélations entre les images formées par les microlentilles du dispositif de mesure de front d'onde s'effectue sur une section de l'objet significativement supérieure à la profondeur de champ de l'objectif d'imagerie pour la majorité des systèmes d'imagerie microscopique de fluorescence avec éclairage par feuille de lumière.

Ce phénomène, mis en évidence par les déposants, est responsable de deux problématiques principales. D'une part la mesure des aberrations correspond dans ce cas à une mesure moyenne des aberrations présentes dans l'épaisseur effective de la feuille de lumière. Cette caractéristique peut être particulièrement problématique dans le cas d'objets très inhomogènes, pour lesquels le domaine d'isoplanétisme axial, c'est-à-dire l'extension selon l'axe optique d'imagerie pour laquelle les aberrations sont identiques, est très faible. Les aberrations mesurées n'étant pas uniquement représentatives des aberrations correspondant au plan d'imagerie dans un tel cas de figure, leur usage dans un système d'optique adaptative ne permet alors pas d'obtenir la meilleure correction possible. D'autre part, lorsque l'objet est constitué d'éléments fluorescents répartis en 3 dimensions dans l'épaisseur de la feuille de lumière, les images produites par les microlentilles de l'analyseur de front d'onde en source étendue correspondent à un système d'imagerie plénoptique, ou « *light-field imaging system* » selon l'expression anglo-saxonne. Dans un tel système, chaque image correspond à une image de l'objet vue selon un angle de vue différent. Dans le cas d'un objet en 3 dimensions comme cela est illustré sur la Fig. 1, la différence d'angle de vue résulte en des images 131 - 135 non semblables du fait de la projection des photons issus de l'objet sur toute l'épaisseur de la feuille de lumière selon des angles différents. Ces différences relatives entre les images sont susceptibles d'avoir un impact sur le résultat de calcul d'intercorrélation entre les images lors de la mesure d'aberrations, et par conséquent peuvent générer des erreurs de mesure significatives.

La présente description a pour objet notamment de proposer un procédé d'imagerie microscopique de fluorescence avec éclairage par feuille de lumière et un système d'imagerie microscopique de fluorescence avec éclairage par feuille de lumière équipé d'un dispositif d'analyse de front d'onde permettant de s'affranchir de toutes ou partie des limitations précitées.

### Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) présenter une marge inférieure et/ou supérieure de 10%, par exemple 5%, de la valeur respective.

Selon un premier aspect, la présente description concerne un procédé d'imagerie microscopique de fluorescence d'un objet volumique et fluorescent au moyen d'un système d'imagerie microscopique de fluorescence avec éclairage par feuille de lumière, ledit système comprenant un objectif de microscope d'imagerie avec une pupille dans un plan pupillaire et un axe optique, le procédé comprenant :
- l'éclairage par feuille de lumière de l'objet au moyen d'une voie d'éclairage comprenant un dispositif d'éclairage, l'éclairage comprenant la génération d'une ligne de lumière et le balayage de la ligne de lumière dans un plan d'éclairage sensiblement perpendiculaire à l'axe optique de l'objectif de microscope d'imagerie pour générer une feuille de lumière, un plan focal dudit objectif de microscope d'imagerie étant compris dans ladite feuille de lumière, ladite feuille de lumière générant une émission de lumière de fluorescence par l'objet;
- la génération, au moyen d'une voie d'imagerie comprenant ledit objectif de microscope d'imagerie et un détecteur d'imagerie comprenant un plan de détection d'imagerie, d'au moins une première image de fluorescence d'une section optique de l'objet superposée au plan focal dudit objectif de microscope d'imagerie, ladite au moins une première image de fluorescence étant générée dans une bande spectrale d'imagerie;
- l'analyse d'un front d'onde de la lumière de fluorescence émise par l'objet au moyen d'une voie d'analyse comprenant ledit objectif de microscope d'imagerie et un dispositif d'analyse d'un front d'onde, le dispositif d'analyse d'un front d'onde comprenant un détecteur bidimensionnel avec un plan de détection d'analyse conjugué avec ledit plan focal de l'objectif de microscope d'imagerie et un arrangement bidimensionnel de microlentilles, agencé dans un plan d'analyse conjugué avec ledit plan pupillaire, ladite analyse d'un front d'onde comprenant :
- la génération par chaque microlentille, sur le plan de détection d'analyse, d'une image de fluorescence d'un champ d'analyse donné de l'objet, situé dans un plan focal de l'objectif de microscope d'imagerie, ladite image de fluorescence étant générée dans une bande spectrale d'analyse;
- le filtrage spatial de la lumière de fluorescence émise par ledit champ d'analyse au moyen d'un dispositif de filtrage spatial comprenant un élément de filtrage agencé dans un plan de filtrage conjugué optiquement avec le plan de détection d'analyse, le filtrage spatial comprenant un balayage dudit élément de filtrage par rapport à une image de fluorescence de ladite ligne de lumière formée dans ledit plan de filtrage, synchronisé avec ledit balayage de la ligne de lumière, de telle sorte à obtenir une superposition, à chaque instant, dudit élément de filtrage et de ladite image de fluorescence de la ligne de lumière;
- le traitement des images de fluorescence générées par les microlentilles au moyen d'une unité de traitement pour déterminer une carte bidimensionnelle d'un paramètre caractéristique du front d'onde dans ledit plan d'analyse
- la correction à partir de la carte bidimensionnelle d'un paramètre caractéristique du front d'onde, d'au moins une partie des défauts optiques entre ladite section optique de l'objet et ledit plan de détection d'imagerie, au moyen d'un dispositif de modulation de front d'onde comprenant un plan de correction conjugué avec le plan pupillaire.

Dans la présente description, la fluorescence s'entend comme l'émission de lumière d'un objet résultant d'une excitation lumineuse par absorption de photons dans une bande spectrale d'absorption donnée. L'émission de lumière de fluorescence peut résulter d'un mécanisme linéaire à un photon ou d'un mécanisme non linéaire à deux photons ou plus, ce mécanisme pouvant résulter de l'interaction de la lumière absorbée avec un élément fluorescent constituant de l'objet ou avec un élément fluorescent ajouté à l'objet, comme par exemple, dans le cas d'un objet biologique, une protéine fluorescente.

Un objet volumique et fluorescent comprend ainsi tout objet comprenant des structures microscopiques, doté de propriétés de fluorescence intrinsèque ou rendu fluorescent par ajout d'un « marqueur ». Un objet volumique et fluorescent comprend par exemple un objet biologique comme une cellule, une culture de cellules, un tissu biologique, un animal, ces objets biologiques étant dotés de propriétés de fluorescence, qu'elles soient intrinsèquement constituantes de l'objet ou induites par ajout d'éléments fluorescents. Parmi les objets volumiques et fluorescents d'intérêt, on citera en particulier les structures neuronales fluorescentes d'un cerveau animal dans le cadre d'études en neuroimagerie.

Une « image de fluorescence » de l'objet ou d'une partie de l'objet dans un plan d'imagerie donné, est donc une image de l'objet ou de la partie de l'objet, formée dans la bande spectrale de fluorescence, par l'ensemble des éléments optiques agencés entre l'objet et le plan d'imagerie.

Un front d'onde au sens de la présente description est la surface d'égale phase d'une onde lumineuse.

Selon un ou plusieurs exemples de réalisation, un paramètre caractéristique du front d'onde comprend un gradient local (ou pente locale) selon deux dimensions du front d'onde intercepté dans le plan d'analyse.

Selon un ou plusieurs exemples de réalisation, un paramètre caractéristique du front d'onde comprend un écart local du front d'onde intercepté dans le plan d'analyse par rapport à un front d'onde de référence correspondant à une onde lumineuse qui n'aurait pas subi de défauts optiques, par exemple un front d'onde plan. La carte bidimensionnelle desdits écarts locaux du front d'onde par rapport à un front d'onde de référence peut être obtenue à partir de la carte bidimensionnelle des pentes locales du front d'onde.

Selon un ou plusieurs exemples de réalisation, la détermination de ladite carte bidimensionnelle comprend la détermination des variations des positions des images de fluorescence générées par les microlentilles, la variation de position d'une image de fluorescence générée par une microlentille étant mesurée par rapport à une position de référence d'une image de fluorescence de référence, la variation de position étant déterminée par une opération entre ladite image et ladite image de référence, ladite opération étant choisie parmi : une intercorrélation, une corrélation de phase, une somme des différences au carré.

Les déposants ont démontré que le procédé ainsi décrit permet par rapport aux procédés connus de l'état de l'art une très forte amélioration de la précision de l'analyse de front d'onde, et ainsi une meilleure qualité d'imagerie, tout en s'affranchissant de la génération d'une étoile artificielle.

En effet, le procédé d'imagerie selon le premier aspect comprend une analyse de front d'onde en source étendue, c'est-à-dire comprenant un traitement sur des images de fluorescence générées par les microlentilles qui ont des dimensions plus grandes que les tâches de diffraction des microlentilles. Par ailleurs, le filtrage spatial mis en œuvre dans l'analyse de front d'onde permet un filtrage confocal de la lumière de fluorescence, c'est-à-dire que seule la lumière de fluorescence provenant d'une section optique de l'objet plus fine que la feuille de lumière est analysée par le dispositif d'analyse de front d'onde, permettant d'éviter des erreurs dans le traitement des images de fluorescence.

On appelle « microlentille » au sens de la présente description tout élément optique de focalisation de dimensions latérales (c'est-à-dire mesurées dans le plan d'analyse) inférieures ou égales à 5 mm, présentant une distance focale inférieure ou égale à 20 mm et une taille de pupille inférieure ou égale à 5 mm. Une microlentille peut comprendre par exemple un matériau transparent avec deux dioptres dont l'un au moins n'est pas plan, le dioptre non plan étant par exemple un dioptre convexe, par exemple un dioptre sphérique.

Selon un ou plusieurs exemples de réalisation, lesdites microlentilles de la matrice de microlentille sont identiques, par exemple agencées selon une matrice bidimensionnelle.

Selon un ou plusieurs exemples de réalisation, lesdites microlentilles de la matrice de microlentilles sont jointives et de pupille carrée.

Selon un ou plusieurs exemples de réalisation, l'élément de filtrage comprend une fente mobile et le filtrage spatial de la lumière de fluorescence émise par ledit champ d'analyse comprend un déplacement transversal de ladite fente, synchronisé avec le balayage de la ligne de lumière.

Un déplacement transversal est un déplacement dans un plan sensiblement perpendiculaire à l'axe optique du dispositif d'analyse de front d'onde, considéré au niveau de ladite fente.

Selon un ou plusieurs exemples de réalisation, l'élément de filtrage comprend une fente fixe et le dispositif de filtrage spatial comprend en outre un ensemble d'éléments optiques dont au moins un premier miroir mobile en rotation, l'ensemble d'éléments optiques étant configuré pour générer une image de fluorescence de la ligne de lumière sur la fente. Le filtrage spatial de la lumière de fluorescence émise par ledit champ d'analyse comprend alors une rotation dudit au moins un premier miroir mobile, synchronisé avec le balayage de la ligne de lumière, pour superposer, à chaque instant, ladite fente et ladite image de fluorescence de ladite ligne de lumière.

Selon un ou plusieurs exemples de réalisation, le dispositif d'éclairage de la voie d'éclairage comprend un dispositif d'émission laser pour l'émission d'un faisceau lumineux et un système optique d'éclairage avec un axe optique d'éclairage, le système optique d'éclairage étant configuré pour générer une ligne de lumière à partir dudit faisceau lumineux parallèle à l'axe optique d'éclairage, la feuille de lumière étant générée par balayage de la ligne de lumière dans une direction perpendiculaire à l'axe optique d'éclairage. Par exemple, le dispositif d'éclairage comprend un dispositif de type DSLM selon l'expression anglo-saxonne « *digitally scanned laser light sheet fluorescence microscopy* » tel que décrit dans [Réf. 7], pp 143 - 144.

Selon un ou plusieurs exemples de réalisation, le dispositif d'éclairage de la voie d'éclairage comprend un dispositif d'émission laser pour l'émission d'un faisceau lumineux et un système optique d'éclairage avec un axe optique d'éclairage configuré pour générer une ligne de lumière à partir dudit faisceau lumineux collimaté perpendiculaire à l'axe optique d'éclairage, la feuille de lumière étant générée par balayage de la ligne de lumière. Par exemple, le dispositif d'éclairage comprend un dispositif de type ASLM selon l'expression anglo-saxonne « *Axially Swept Light Sheet Microscopy* » tel que décrit dans [Réf. 8].

Selon un ou plusieurs exemples de réalisation, la feuille de lumière étant générée par balayage de la ligne de lumière dans une direction parallèle à l'axe optique d'éclairage. Dans d'autres exemples de réalisation, la feuille de lumière est générée par balayage de la ligne de lumière dans une direction inclinée par rapport à l'axe optique d'éclairage.

Selon un ou plusieurs exemples de réalisation, la bande spectrale d'imagerie est identique à la bande spectrale d'analyse.

Selon un ou plusieurs exemples de réalisation, la bande spectrale d'imagerie est différente de la bande spectrale d'analyse. Ceci peut présenter un avantage si l'on souhaite profiter d'un maximum de puissance lumineuse sur la voie d'imagerie, sans qu'une partie de la puissance lumineuse utile pour l'imagerie soit envoyée sur la voie d'analyse.

Selon un deuxième aspect, la présente description concerne un dispositif de correction de front d'onde, configuré pour être connecté à un système d'imagerie microscopique de fluorescence avec éclairage par feuille de lumière, ledit système d'imagerie microscopique de fluorescence comprenant une voie d'imagerie comprenant un objectif de microscope d'imagerie avec une pupille dans un plan pupillaire et un axe optique et une voie d'éclairage comprenant un dispositif d'éclairage configuré pour le balayage d'une ligne de lumière dans un plan d'éclairage sensiblement perpendiculaire à l'axe optique pour générer une feuille de lumière.

Le dispositif de correction de front d'onde selon le deuxième aspect comprend :
- un dispositif d'analyse de front d'onde comprenant :
- un détecteur bidimensionnel comprenant un plan de détection d'analyse;
- un arrangement bidimensionnel de microlentilles, agencé dans un plan d'analyse, chaque microlentille étant configurée pour générer sur le plan de détection d'analyse, lorsque le dispositif d'analyse est connecté au système d'imagerie microscopique, une image de fluorescence d'un champ d'analyse donné de l'objet, situé dans un plan focal de l'objectif de microscope d'imagerie, ladite image de fluorescence étant générée dans une bande spectrale d'analyse;
- un dispositif de filtrage spatial configuré pour le filtrage spatial de la lumière de fluorescence émise par ledit champ d'analyse lorsque le dispositif de correction de front d'onde est connecté au système d'imagerie microscopique, le dispositif de filtrage spatial comprenant un élément de filtrage agencé dans un plan de filtrage conjugué optiquement avec le plan de détection d'analyse et des moyens de balayage configurés pour le balayage dudit élément de filtrage par rapport à une image de fluorescence de ladite ligne de lumière formée dans ledit plan de filtrage, synchronisé avec ledit balayage de la ligne de lumière, de telle sorte à obtenir une superposition, à chaque instant, dudit élément de filtrage et de ladite image de fluorescence de la ligne de lumière;
- une unité de traitement configurée pour déterminer à partir de l'ensemble des images formées par les microlentilles une carte bidimensionnelle d'un paramètre caractéristique du front d'onde dans ledit plan d'analyse ; le dispositif de correction de front d'onde comprenant en outre:
- un dispositif de modulation de front d'onde comprenant un plan de correction, configuré pour la correction, à partir de la carte bidimensionnelle d'un paramètre caractéristique du front d'onde, d'au moins une partie des défauts optiques entre ladite section optique de l'objet et ledit plan de détection d'imagerie (PP₁), lorsque le dispositif de correction de front d'onde est connecté au système d'imagerie microscopique;
- un premier système optique relai configuré pour conjuguer optiquement le plan pupillaire, le plan de correction et le plan d'analyse, lorsque le dispositif de correction de front d'onde est connecté au système d'imagerie microscopique ;
- un deuxième système optique relai configuré pour conjuguer optiquement le plan focal de l'objectif de microscope d'imagerie, le plan de détection d'analyse, le plan de détection d'imagerie et le plan de filtrage, lorsque le dispositif de correction de front d'onde est connecté au système d'imagerie microscopique.

Selon un ou plusieurs exemples de réalisation, l'élément de filtrage du dispositif de filtrage spatial comprend une fente mobile, et les moyens de balayage sont configurés pour générer un déplacement transversal de ladite fente, synchronisé avec le balayage de la ligne de lumière.

Selon un ou plusieurs exemples de réalisation, ladite fente mobile est formée par un élément optomécanique mobile configuré pour la transmission ou la réflexion de la lumière de fluorescence.

Selon un ou plusieurs exemples de réalisation, ladite fente mobile est formée par un l'adressage d'un groupe d'une ou plusieurs ligne(s) (ou colonne(s)) d'un dispositif de modulation spatiale d'intensité.

Selon un ou plusieurs exemples de réalisation, l'élément de filtrage comprend une fente fixe et le dispositif de filtrage spatial comprend en outre un ensemble d'éléments optiques dont au moins un premier miroir mobile en rotation, et dans lequel :
- l'ensemble d'éléments optiques est configuré pour générer une image de fluorescence de la ligne de lumière sur la fente ; et
- les moyens de balayage sont configurés pour générer une rotation dudit au moins un premier miroir mobile, synchronisé avec le balayage de la ligne de lumière, pour superposer, à chaque instant, ladite fente et ladite image de fluorescence de ladite ligne de lumière.

Selon un ou plusieurs exemples de réalisation, les moyens de balayage sont configurés pour générer une rotation d'un second miroir mobile de l'ensemble d'éléments optiques, synchronisé avec le balayage de la ligne de lumière et le balayage du premier miroir mobile, permettant de reconstituer l'image de fluorescence produite par la succession temporelle des images de fluorescence de la ligne de lumière produites par le balayage de la ligne de lumière, dans un plan focal intermédiaire conjugué avec le plan de détection d'analyse.

Dans d'autres exemples de réalisation, l'ensemble d'éléments optiques comprend au moins un ou plusieurs miroir(s) de repli configuré(s) pour que ledit premier miroir mobile permette de reconstituer l'image de fluorescence produite par la succession temporelle des images de fluorescence de la ligne de lumière produites par le balayage de la ligne de lumière, dans un plan focal intermédiaire conjugué avec le plan de détection d'analyse.

Selon un ou plusieurs exemples de réalisation, une largeur de la fente est comprise entre une valeur minimale égale à la limite de diffraction, avantageusement deux fois la limite de diffraction, de l'objectif de microscope d'imagerie multipliée par le grandissement optique entre le plan focal de l'objectif de microscope d'imagerie et le plan de filtrage dans lequel est agencée la fente, et une valeur maximale égale à la largeur de la zone de Rayleigh correspondant à un faisceau gaussien générant la ligne de lumière de fluorescence et multipliée par le grandissement optique entre le plan focal de l'objectif de microscope d'imagerie et le plan de filtrage dans lequel est agencée la fente.

Selon un ou plusieurs exemples de réalisation, le dispositif de modulation de front d'onde comprend un miroir déformable généralement constitué d'une membrane et d'actionneurs permettant de modifier localement la position axiale de ladite membrane. Le dispositif de modulation de front d'onde peut comprendre également un modulateur spatial de lumière ou SLM (abréviation de l'expression anglo-saxonne « Spatial Light Modulator »), généralement constitué d'un arrangement bidimensionnel de cellules à cristaux liquides couplées à des électrodes permettant de modifier localement l'indice de réfraction desdites cellules. Le dispositif de modulation de front d'onde peut comprendre également une lentille déformable généralement constituée d'éléments actifs permettant de modifier localement la forme et/ou l'épaisseur de ladite lentille.

Par correction des défauts optiques, ou correction du front d'onde, on entend la modification locale de la phase de l'onde dans le plan de correction visant à obtenir un front d'onde de référence. Selon la destination de la méthode de correction de front d'onde, le front d'onde de référence peut être un front d'onde plan, comme par exemple pour optimiser les performances d'un système d'imagerie, ou un front d'onde spécifique.

Selon un ou plusieurs exemples de réalisation, le dispositif selon le deuxième aspect comprend en outre un élément séparateur de faisceau, agencé entre le dispositif de modulation de front d'onde et le dispositif d'analyse de front d'onde et configuré pour séparer le dispositif d'analyse de front d'onde et la voie d'imagerie, lorsque le dispositif de correction de front d'onde est connecté au système d'imagerie microscopique.

Selon un ou plusieurs exemples de réalisation, l'élément séparateur de faisceau est dichroïque, c'est-à-dire qu'il permet de séparer la lumière incidente selon une première bande spectrale en réflexion et selon une seconde bande spectrale différente de la première bande spectrale en transmission.

Selon un ou plusieurs exemples de réalisation, l'élément séparateur de faisceau de type dichroïque permet de séparer les deux bandes spectrales respectivement d'imagerie et d'analyse vers la voie d'imagerie et vers la voie d'analyse.

Selon un ou plusieurs exemples de réalisation, le détecteur bidimensionnel comprend un agencement bidimensionnel de détecteurs élémentaires et une tache de diffraction d'une microlentille comprend selon une direction entre 0,2 et 2 détecteurs élémentaires. On définit la dimension d'une tache de diffraction d'une microlentille selon une direction par la distance séparant les 2 premiers minima d'intensité situés de part et d'autre du maximum d'intensité. Les déposants ont montré que cette configuration particulière représentait un bon compromis entre la précision de mesure de front d'onde et la taille du champ d'analyse.

Selon un ou plusieurs exemples de réalisation, la détermination de ladite carte bidimensionnelle comprend la détermination de variations des positions des images formées par les microlentilles, la variation de position d'une image formée par une microlentille étant mesurée par rapport à une position de référence d'une image de référence, la variation de position étant déterminée par une opération d'intercorrélation entre ladite image et ladite image de référence.

Selon un troisième aspect, la présente description concerne un système d'imagerie microscopique de fluorescence d'un objet volumique et fluorescent avec éclairage par feuille de lumière comprenant :
- une voie d'imagerie configurée pour la génération d'au moins une première image d'une section optique de l'objet dans une bande spectrale d'imagerie, ladite voie d'imagerie comprenant un objectif de microscope d'imagerie avec une pupille dans un plan pupillaire et un détecteur d'imagerie comprenant un plan de détection d'imagerie, ladite section optique étant superposée à un plan focal dudit objectif de microscope d'imagerie;
- une voie d'éclairage de l'objet comprenant un dispositif d'éclairage configuré pour le balayage d'une ligne de lumière dans un plan d'éclairage sensiblement perpendiculaire à l'axe optique de l'objectif de microscope d'imagerie ;
- une voie d'analyse et de correction comprenant ledit objectif de microscope d'imagerie et un dispositif de correction front d'onde selon le deuxième aspect, configuré pour la correction à partir de la carte bidimensionnelle d'un paramètre caractéristique du front d'onde, d'au moins une partie des défauts optiques entre ladite section optique de l'objet et ledit plan de détection d'imagerie.

Selon un ou plusieurs exemples de réalisation, le dispositif d'éclairage de la voie d'éclairage comprend un dispositif d'émission laser pour l'émission d'un faisceau lumineux et un système optique d'éclairage avec un axe optique d'éclairage, le système optique étant configuré pour générer une ligne de lumière à partir dudit faisceau lumineux parallèle à l'axe optique d'éclairage, la feuille de lumière étant générée par balayage de la ligne de lumière dans une direction perpendiculaire à l'axe optique d'éclairage.

Selon un ou plusieurs exemples de réalisation, le dispositif d'éclairage de la voie d'éclairage comprend un dispositif d'émission laser pour l'émission d'un faisceau lumineux et un système optique d'éclairage avec un axe optique d'éclairage configuré pour générer une ligne de lumière à partir dudit faisceau lumineux collimaté perpendiculaire à l'axe optique d'éclairage, la feuille de lumière étant générée par balayage de la ligne de lumière.

Selon un ou plusieurs exemples de réalisation, le détecteur d'imagerie comprend un détecteur bidimensionnel avec un arrangement bidimensionnel de détecteurs élémentaires ou « pixels », le détecteur étant configuré pour une lecture par ligne ou par colonne des pixels synchrone avec le balayage de la ligne de lumière. Par lecture par ligne ou par colonne, on comprend la lecture séquentielle d'un groupe d'une ou plusieurs lignes ou d'un groupe d'une ou plusieurs colonnes. Par exemple, le détecteur d'imagerie est une caméra à obturateur défilant également connue comme une caméra de type « *rolling shutter* » selon l'expression anglosaxonne.

Selon un ou plusieurs exemples de réalisation, la voie d'imagerie comprend en outre une unité de traitement des signaux issus du détecteur d'imagerie. Bien entendu, en pratique, les unités de traitement de la voie d'analyse et de la voie d'imagerie peuvent être rassemblées au sein d'une même unité.

### Brève description des figures

D'autres avantages et caractéristiques de l'invention apparaîtront à la lecture de la description, illustrée par les figures suivantes :
[Fig. 1], déjà décrite, représente schématiquement la formation d'images fluorescentes par des microlentilles d'un dispositif d'analyse de front d'onde selon l'état de l'art, connecté à un système d'imagerie de fluorescence avec éclairage par feuille de lumière ;
[Fig. 2], illustre un schéma d'un exemple d'un système d'imagerie de fluorescence avec éclairage par feuille de lumière, selon la présente description.
   Description détaillée de l'invention ;
[Fig. 3A], illustre un schéma d'une voie d'éclairage d'un système d'imagerie de fluorescence avec éclairage par feuille de lumière selon la présente description, selon un premier exemple de réalisation ;
[Fig. 3B], illustre un schéma d'une voie d'éclairage d'un système d'imagerie de fluorescence avec éclairage par feuille de lumière selon la présente description, selon un deuxième exemple de réalisation ;
[Fig. 3C], illustre un schéma d'une voie d'éclairage d'un système d'imagerie de fluorescence avec éclairage par feuille de lumière selon la présente description, selon un troisième exemple de réalisation ;
[Fig. 4A], illustre un premier exemple d'un dispositif de filtrage spatial d'un dispositif d'analyse de front d'onde selon la présente description, l'élément de filtrage du dispositif de filtrage spatial comprenant une fente mobile formée par un élément optomécanique mobile configuré pour la transmission ou la réflexion de la lumière de fluorescence.
[Fig. 4B], illustre un deuxième exemple d'un dispositif de filtrage spatial d'un dispositif d'analyse de front d'onde selon la présente description, l'élément de filtrage du dispositif de filtrage spatial comprenant une fente mobile formée par l'adressage d'un groupe d'une ou plusieurs ligne(s) (ou colonne(s)) d'un dispositif de modulation spatiale d'intensité ;
[Fig. 5A], illustre un premier exemple d'un dispositif de filtrage spatial avec une fente fixe et des moyens de balayage d'une image de fluorescence de la ligne de lumière sur la fente, dans un dispositif d'analyse de front d'onde selon la présente description ;
[Fig. 5B], illustre un deuxième exemple d'un dispositif de filtrage spatial avec une fente fixe et des moyens de balayage d'une image de fluorescence de la ligne de lumière sur la fente, dans un dispositif d'analyse de front d'onde selon la présente description ;
[Fig. 6], montre un schéma illustrant la synchronisation entre les différentes voies, selon un exemple de réalisation du procédé selon la présente description.

### Description détaillée de l'invention

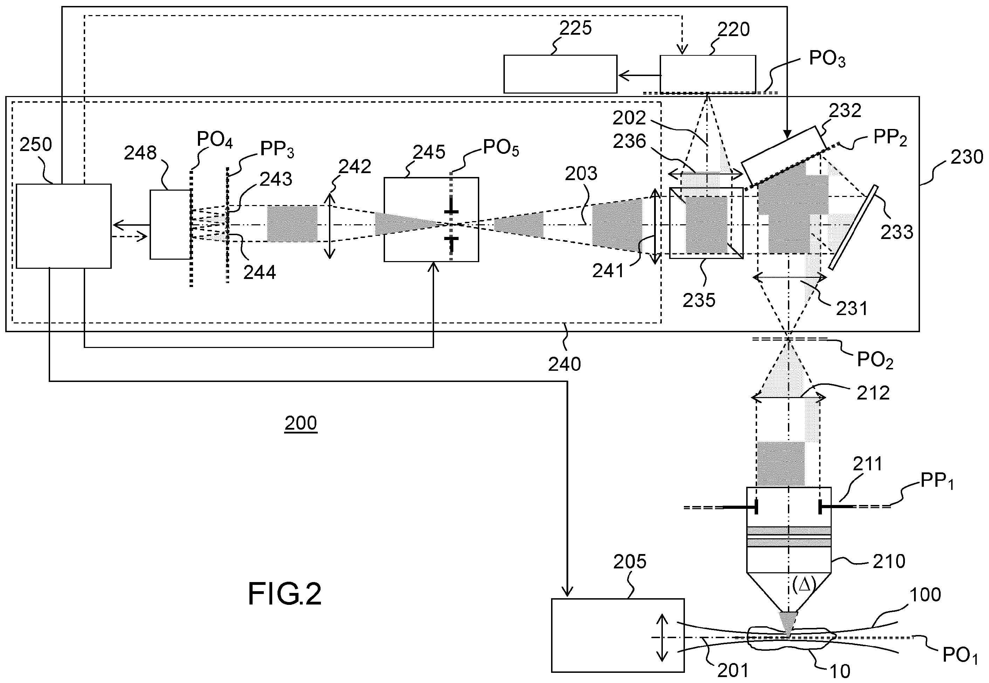

La Fig. 2 illustre schématiquement un exemple d'un système d'imagerie microscopique 200 avec éclairage par feuille de lumière pour la mise en œuvre d'exemple de procédés d'imagerie microscopique d'un objet volumique et fluorescent 10, selon la présente description.

Le système d'imagerie microscopique 200 illustré sur la Fig. 2 comprend une voie d'éclairage 201 configurée pour un éclairage de l'objet par feuille de lumière, une voie d'imagerie 202 configurée pour la génération d'au moins une première image d'une section optique de l'objet dans une bande spectrale d'imagerie, et une voie d'analyse et de correction 203.

La voie d'imagerie 202 comprend un objectif de microscope d'imagerie 210 avec une pupille dans un plan pupillaire PP₁ et un détecteur d'imagerie 220 comprenant un plan de détection d'imagerie agencé dans un plan PO₃ conjugué avec un plan focal PO₁ de l'objectif de microscope d'imagerie, ladite section optique étant superposée au plan focal PO₁ de l'objectif de microscope d'imagerie. Comme cela est illustré sur la Fig. 2, la voie d'imagerie peut comprendre en outre une unité de traitement 225 des signaux issus du détecteur d'imagerie 220. Le détecteur d'imagerie 220 est par exemple un détecteur bidimensionnel, par exemple une caméra CCD (Charge Coupled Device) ou une caméra CMOS (Complementary Metal Oxyde Sensor) de forte sensibilité, comme par exemple les caméras sCMOS, par exemple une caméra de type « *rolling shutter* »*.*

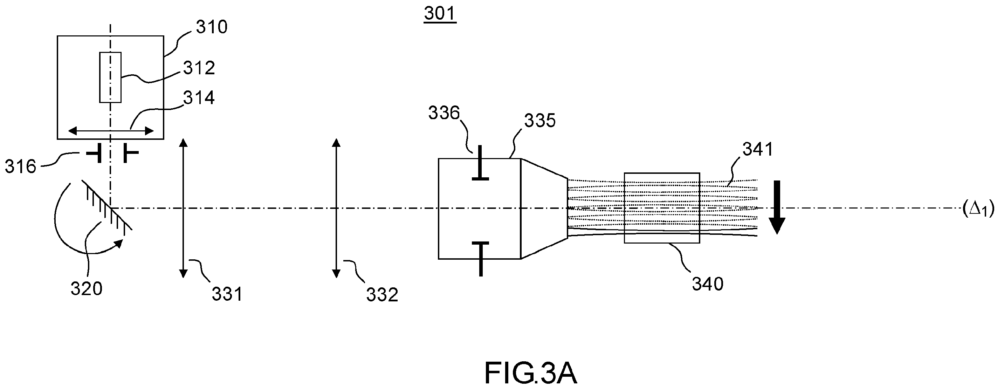

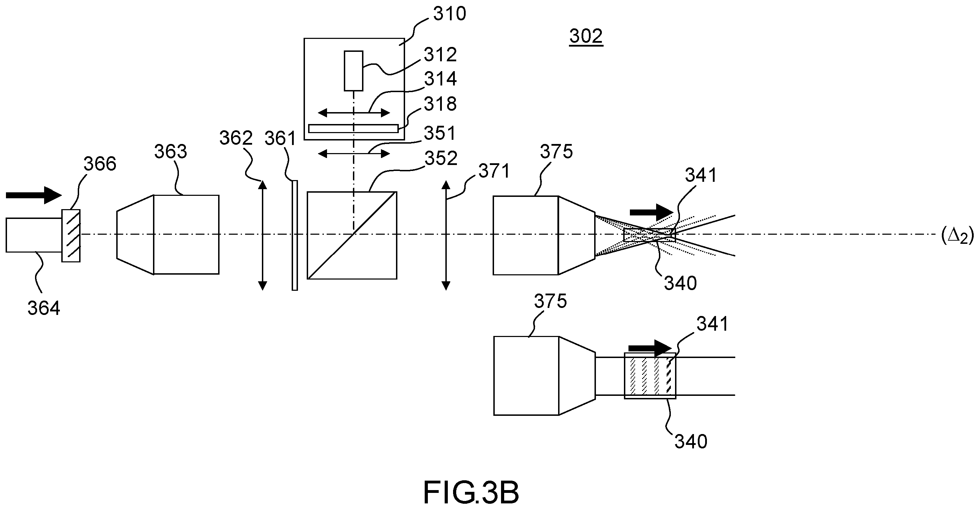

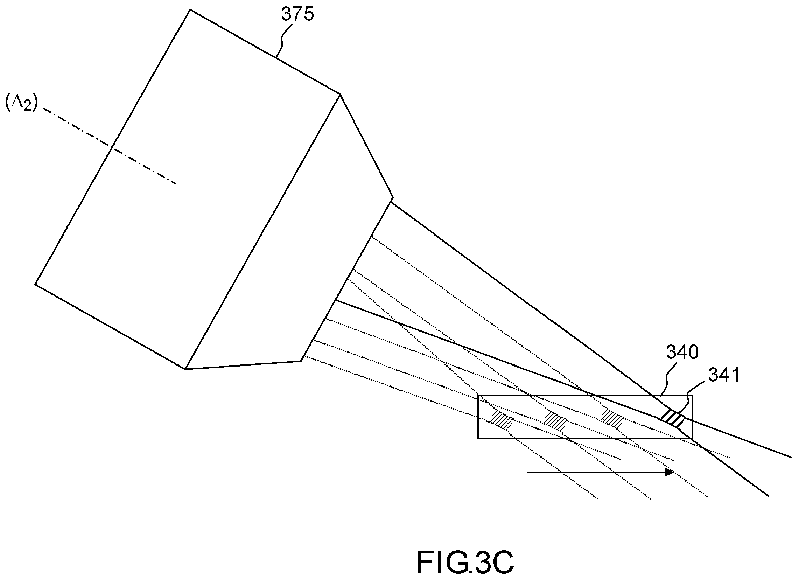

La voie d'éclairage 201 comprend un dispositif d'éclairage 205 configuré pour le balayage d'une ligne de lumière dans un plan d'éclairage sensiblement perpendiculaire à l'axe optique de l'objectif de microscope d'imagerie, afin de générer une feuille de lumière 100 pour générer une feuille de lumière 100, le plan focal PO₁ dudit objectif de microscope d'imagerie étant compris dans ladite feuille de lumière, ladite feuille de lumière étant configurée pour générer une émission de lumière de fluorescence, dans une ou plusieurs bandes spectrales, dont la bande spectrale d'imagerie. Des exemples de dispositif d'éclairage seront décrits en référence aux Fig. 3A, Fig. 3B, Fig. 3C.

La voie d'analyse et de correction 203 comprend ledit objectif de microscope d'imagerie et un dispositif de correction front d'onde 230 configuré pour la correction à partir de la carte bidimensionnelle d'un paramètre caractéristique du front d'onde, d'au moins une partie des défauts optiques entre ladite section optique de l'objet et ledit plan de détection d'imagerie PP₁.

Ainsi, dans des exemples de réalisation tels que décrits en référence à la Fig. 2, le système d'imagerie microscopique 200 est modulaire, formé de trois modules principaux à savoir un module « microscope » comprenant le dispositif d'éclairage 205 et l'objectif de microscope d'imagerie 210, un module de détection avec le détecteur d'imagerie 220 et un module d'analyse et de correction comprenant le dispositif de correction de front d'onde 230. En pratique, le dispositif de correction de front d'onde 230 peut être configuré pour être connecté à un système d'imagerie microscopique existant comprenant le microscope et le module de détection. Dans un tel système d'imagerie microscopique existant, le plan de détection du détecteur d'imagerie 220 est en général positionné dans un plan focal intermédiaire PO₂ d'un objectif 212 (ou lentille de tube). Pour connecter le dispositif de correction de front d'onde 230 au système d'imagerie existant, il suffit, comme cela est visible sur la Fig. 2, de déplacer le détecteur d'imagerie 220 de telle sorte que le plan de détection se trouve dans un plan focal PO₃ conjugué avec le plan focal PO₁ de l'objectif de microscope d'imagerie. Le dispositif de correction de front d'onde 230 peut comprendre des interfaces mécaniques (non représentées) permettant de connecter ledit dispositif de correction de front d'onde 230 au microscope et au détecteur d'imagerie. Un tel agencement modulaire présente l'avantage de pourvoir s'adapter à des systèmes d'imagerie microscopique avec éclairage par feuille de lumière existants.

Dans d'autres exemples de réalisation, le système d'imagerie microscopique n'est pas modulaire et est conçu et optimisé dans son ensemble, avec l'ensemble des voies 201, 202, 203, sans chercher à connecter un dispositif de correction à un système existant.

Dans tous les cas, le dispositif de correction de front d'onde 230 comprend un dispositif d'analyse de front d'onde 240 comprenant un détecteur bidimensionnel 248 avec un plan de détection d'analyse PO₄ et un arrangement bidimensionnel 243 de microlentilles 244, agencé dans un plan d'analyse PP₃. Chaque microlentille est configurée pour générer sur le plan de détection d'analyse une image de fluorescence d'un champ d'analyse donné de l'objet, dans une bande spectrale d'analyse, le champ d'analyse étant situé dans le plan focal PO₁ de l'objectif de microscope d'imagerie.

Dans des exemples de réalisation, la bande spectrale d'imagerie est identique à la bande spectrale d'analyse. On détecte alors sur chacune des voies d'analyse et d'imagerie une lumière de fluorescence présentant la même bande spectrale.

Dans d'autres exemples de réalisation, la bande spectrale d'imagerie peut différer de la bande spectrale d'analyse. Ceci peut présenter un avantage si l'on souhaite profiter d'un maximum de puissance lumineuse sur la voie d'imagerie, sans qu'une partie de la puissance lumineuse soit envoyée sur la voie d'analyse. Pour ce faire, il est possible par exemple d'éclairer l'objet avec une feuille de lumière qui comprend deux bandes spectrales d'excitation distinctes de nature à faire émettre par l'objet de la lumière de fluorescence dans deux bandes spectrales de fluorescence distinctes, l'une formant la bande spectrale d'imagerie et l'autre la bande spectrale d'analyse. Le dispositif de correction de front d'onde 230 comprend par ailleurs une unité de traitement 250 configurée pour déterminer à partir de l'ensemble des images formées par les microlentilles une carte bidimensionnelle d'un paramètre caractéristique du front d'onde dans ledit plan d'analyse.

Selon un ou plusieurs exemples de réalisation, le détecteur bidimensionnel comprend un agencement bidimensionnel de détecteurs élémentaires et une tache de diffraction d'une microlentille comprend selon une direction entre 0,2 et 2 détecteurs élémentaires. On définit la dimension d'une tache de diffraction d'une microlentille selon une direction par la distance séparant les 2 premiers minima d'intensité situés de part et d'autre du maximum d'intensité. Les déposants ont montré que cette configuration particulière représentait un bon compromis entre la précision de mesure de front d'onde et la taille du champ d'analyse.

Par exemple, un paramètre caractéristique du front d'onde comprend un gradient local (ou pente locale) selon deux dimensions du front d'onde intercepté dans le plan d'analyse. Selon un autre exemple, un paramètre caractéristique du front d'onde comprend un écart local du front d'onde intercepté dans le plan d'analyse par rapport à un front d'onde de référence correspondant à une onde lumineuse qui n'aurait pas subi de défauts optiques, par exemple un front d'onde plan. La carte bidimensionnelle desdits écarts locaux du front d'onde par rapport à un front d'onde de référence peut être obtenue à partir de la carte bidimensionnelle des pentes locales du front d'onde.

Par ailleurs, la détermination de la carte bidimensionnelle d'un paramètre caractéristique du front d'onde peut comprendre la détermination des variations des positions des images de fluorescence générées par les microlentilles, la variation de position d'une image de fluorescence générée par une microlentille étant mesurée par rapport à une position de référence d'une image de fluorescence de référence, la variation de position étant déterminée par exemple par une opération d'intercorrélation entre ladite image de fluorescence et ladite image de fluorescence de référence. Les pentes locales du front d'onde sont déterminées à partir des variations de position des images de fluorescence.

Une intercorrélation entre deux images bidimensionnelles I₁(x,y) et I₂(x,y) acquises par un détecteur bidimensionnel et représentant ainsi les valeurs d'intensité lumineuse des images I₁ et I₂ au point de coordonnées (x,y) est connue comme le résultat du calcul suivant : [Math 2] $c \left(x, y\right) = {\sum }_{s} {\sum }_{t} {I}_{1} \left(s, t\right) {I}_{2} \left(x+s,y+t\right)$ s et t étant 2 variables décrivant un décalage spatial selon les 2 axes de l'image bidimensionnelle. On pourra préférentiellement effectuer une opération de corrélation normalisée pour réduire une éventuelle influence de la différence d'intensité moyenne entre les 2 images.

La détermination de la variation de position entre ladite image de fluorescence et ladite image de fluorescence de référence peut être déterminée par d'autres opérations connues de l'homme de l'art, par exemple et de façon non exhaustive : une opération de corrélation de phase, une opération de somme des différences au carré, ou « *sum of squared difference* » selon l'expression anglosaxonne.

Une corrélation de phase entre deux images est connue comme le résultat du calcul suivant, en considérant les mêmes notations que précédemment : [Math 3] ${c}_{p} \left(x, y\right) = {F}^{- 1} \left\{\frac{F \left\{{I}_{1}\right\} oF * \left\{{I}_{2}\right\}}{\left|F\left\{{I}_{1}\right\}oF*\left\{{I}_{2}\right\}\right|}\right\}$ où 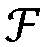 désigne l'opérateur transformée de Fourier, o désigne l'opérateur produit de Hadamard, et | | désigne l'opérateur valeur absolue.

Une somme des différences au carré entre deux images est connue comme le résultat du calcul suivant, en considérant les mêmes notations que précédemment : [Math 4] $SSD \left(x, y\right) = {\sum }_{s} {\sum }_{t} {\left[{I}_{1}\left(x+s,y+t\right)-{I}_{2}\left(s, t\right)\right]}^{2}$

Dans ces différents exemples, la différence de position d'une image de fluorescence générée par une microlentille par rapport à une position de référence d'une image de fluorescence de référence est par exemple déterminée par la détermination de la position de la valeur maximale selon 2 dimensions de la figure résultant de l'opération d'intercorrélation ou de corrélation de phase, ou par la détermination de la position de la valeur minimale selon 2 dimensions de la figure résultant de l'opération de somme des différences au carré.

L'unité de traitement 250 est de manière générale configurée pour la mise en œuvre d'étapes de calcul et/ou de traitement mises en œuvre dans des procédés selon la présente demande.

De façon générale, lorsque dans la présente description, il est fait référence à des étapes de calcul ou traitement pour la mise en œuvre notamment d'étapes de procédés, il est entendu que chaque étape de calcul ou traitement peut être mis en œuvre par logiciel, matériel ou « hardware » selon l'expression anglo-saxonne, micrologiciel ou « firmware » selon l'expression anglo-saxonne, microcode ou toute combinaison appropriée de ces technologies. Lorsqu'un logiciel est utilisé, chaque étape de calcul ou traitement peut être mise en œuvre par des instructions de programme d'ordinateur ou du code logiciel. Ces instructions peuvent être stockées ou transmises vers un support de stockage lisible par un ordinateur (ou unité de traitement) et/ou être exécutées par un ordinateur (ou unité de traitement) afin de mettre en œuvre ces étapes de calcul ou traitement. Ainsi, l'unité de traitement 250 et l'unité de traitement 225 peuvent être regroupées au sein d'une même unité, par exemple un ordinateur.

Le dispositif de correction de front d'onde 230 comprend également un dispositif de modulation de front d'onde 232 comprenant un plan de correction PP₂, configuré pour la correction à partir de la carte bidimensionnelle d'un paramètre caractéristique du front d'onde, d'au moins une partie des défauts optiques entre la section optique de l'objet et le plan de détection d'imagerie PP₁. Un premier système optique relai permet de conjuguer optiquement le plan pupillaire PP₁ de l'objectif de microscope d'imagerie 210, le plan de correction PP₂ et le plan d'analyse PP₃. Dans l'exemple de la Fig. 2 qui représente un système d'imagerie microscopique modulaire, le premier système optique relai comprend notamment les objectifs 231, 241, 242. Par ailleurs, un deuxième système optique relai permet de conjuguer optiquement le plan focal objet PO₁ de l'objectif de microscope d'imagerie 210 et le plan de détection PO₃. Dans l'exemple de la Fig. 2, le deuxième système optique relai comprend notamment les objectifs 231, 236. Bien entendu, d'autres arrangements sont possibles pour assurer les conjugaisons optiques entre les différents plans pupillaires et entre les différents plans focaux.

Le dispositif de modulation de front d'onde 232 peut comprendre, de manière connue et sans que ce soit limitatif, un miroir déformable généralement constitué d'une membrane et d'actionneurs permettant de modifier localement la position axiale de ladite membrane. Le dispositif de modulation de front d'onde peut comprendre également un modulateur spatial de lumière ou SLM (abréviation de l'expression anglo-saxonne « *Spatial Light Modulator* »), généralement constitué d'un arrangement bidimensionnel de cellules à cristaux liquides couplées à des électrodes permettant de modifier localement l'indice de réfraction desdites cellules.

Comme illustré sur la Fig. 2, le dispositif de correction de front d'onde 230 peut comprendre également un élément séparateur de faisceau 235, agencé entre le dispositif 232 de modulation de front d'onde et le dispositif 240 d'analyse de front d'onde et configuré pour séparer la voie d'analyse de front d'onde 203 du dispositif 240 d'analyse de front d'onde et la voie d'imagerie 202, lorsque le dispositif de correction de front d'onde est connecté au système d'imagerie microscopique.

Dans des exemples de réalisation, l'élément séparateur de faisceau 235 est dichroïque, c'est-à-dire qu'il permet de séparer la lumière incidente selon une première bande spectrale en réflexion et selon une seconde bande spectrale différente de la première bande spectrale en transmission. La propriété dichroïque de l'élément séparateur présente un intérêt lorsque la bande spectrale d'imagerie est différente de la bande spectrale d'analyse.

Selon la présente description, le dispositif d'analyse de front d'onde 240 comprend en outre un dispositif de filtrage spatial 245 configuré pour le filtrage spatial de la lumière de fluorescence émise par ledit champ d'analyse lorsque le dispositif de correction de front d'onde est connecté au système d'imagerie microscopique.

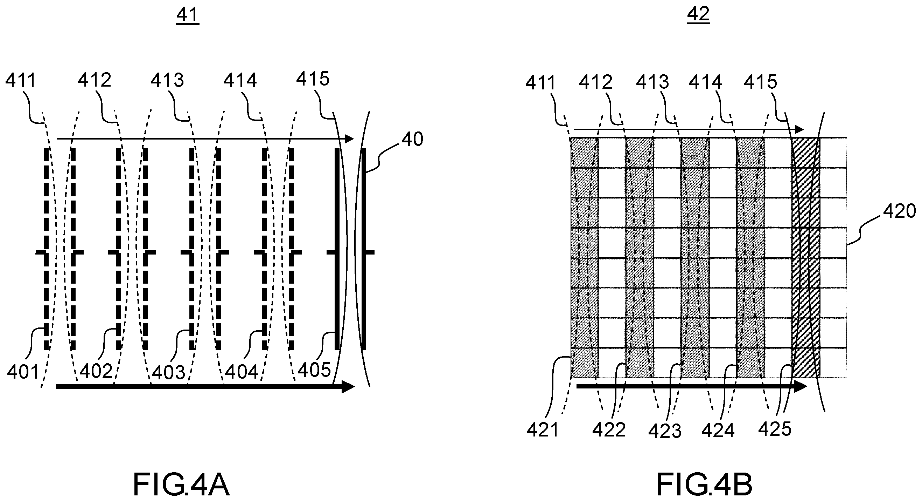

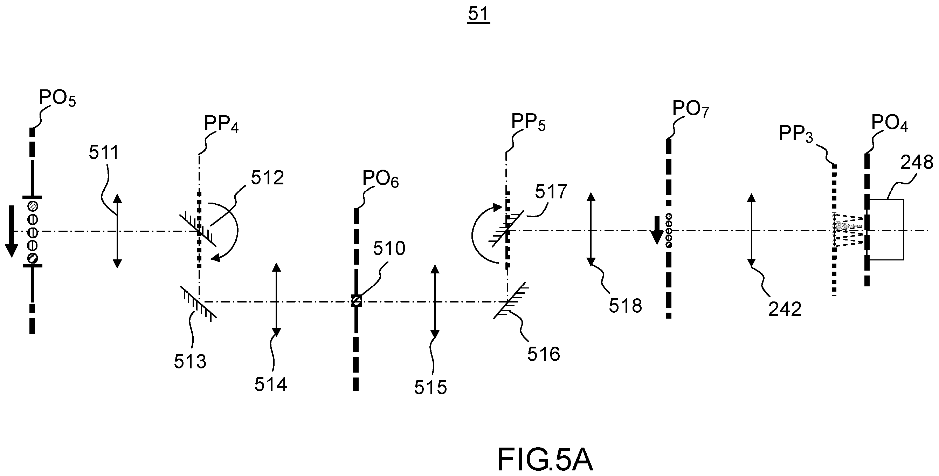

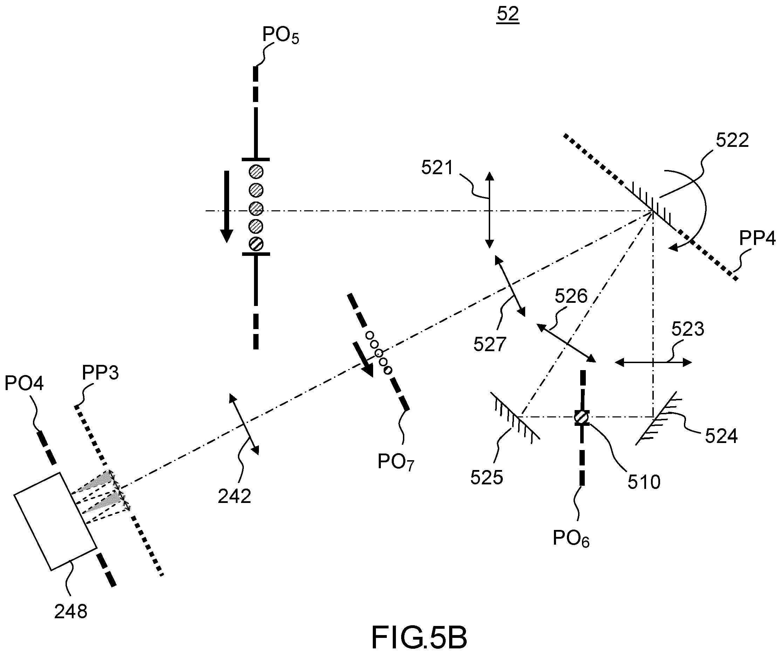

Le dispositif de filtrage spatial, dont des exemples sont décrits de façon détaillée en référence aux Fig. 4A, Fig. 4B, Fig. 5A, Fig. 5B, comprend un élément de filtrage agencé dans un plan de filtrage conjugué optiquement avec le plan de détection d'analyse PO₄. Il comprend par ailleurs des moyens de balayage configurés pour le balayage de l'élément de filtrage par rapport à une image de fluorescence de la ligne de lumière formée dans ledit plan de filtrage. Le balayage de l'élément de filtrage par rapport à l'image de fluorescence de la ligne de lumière est synchronisé avec le balayage de la ligne de lumière de telle sorte à obtenir une superposition, à chaque instant, de l'élément de filtrage et de l'image de fluorescence de la ligne de lumière. Les déposants ont démontré que le balayage de l'élément de filtrage par rapport à l'image de fluorescence de la ligne de lumière synchronisé avec le balayage de la ligne de lumière permet un filtrage confocal de la lumière de fluorescence, c'est-à-dire que seule la lumière de fluorescence provenant d'une section optique de l'objet plus fine que la feuille de lumière est analysée par le dispositif d'analyse de front d'onde. Un tel filtrage confocal permet d'éviter des erreurs dans le traitement des images de fluorescence générées par les microlentilles, ce qui résulte, par rapport aux procédés connus de l'état de l'art, en une très forte amélioration de la précision de l'analyse de front d'onde, ainsi qu'une meilleure qualité d'imagerie.

La figure 3A illustre schématiquement un premier exemple de réalisation d'un dispositif d'éclairage 301 d'un système d'imagerie de fluorescence avec éclairage par feuille de lumière selon la présente description.

Le dispositif d'éclairage comprend dans cet exemple un dispositif d'émission laser 310 pour l'émission d'un faisceau lumineux, plus précisément dans cet exemple un faisceau lumineux collimaté. Le dispositif d'émission laser 310 comprend au moins une première source de lumière 312 spatialement cohérente, par exemple une source laser, par exemple une diode laser, émettant à une longueur d'onde d'excitation de marqueurs fluorescents de l'objet, ainsi qu'une lentille de collimation 314. Un diaphragme 316, par exemple un diaphragme à iris peut également être prévu pour contrôler le diamètre du faisceau lumineux en sortie du dispositif d'émission 310. Le dispositif d'éclairage 301 comprend également un système optique d'éclairage avec un axe optique d'éclairage Δ₁, le système optique d'éclairage étant configuré pour générer une ligne de lumière 341 à partir du faisceau lumineux, la ligne de lumière étant parallèle à l'axe optique d'éclairage Δ₁, et un dispositif de balayage angulaire 320, par exemple un miroir galvanométrique, configuré pour balayer la ligne de lumière 341 dans une direction perpendiculaire à l'axe optique d'éclairage Δ₁ pour générer la feuille de lumière 340.

Le système optique d'éclairage comprend dans cet exemple une optique de focalisation 335, par exemple un objectif de microscope, qui définit l'axe optique d'éclairage Δ₁.

Le système optique d'éclairage comprend également dans cet exemple un système optique relai, comprenant des optiques 331, 332 configurées pour relayer, avec le dispositif de balayage angulaire 320, le faisceau lumineux issu du dispositif d'émission laser 310 vers l'optique de focalisation 335. Les optiques 331 et 332 effectuent une conjugaison optique entre le plan dans lequel est effectué le balayage angulaire du dispositif de balayage angulaire 320, par exemple la surface réfléchissante d'un miroir galvanométrique, et le plan focal arrière 336 (ou *Back Focal Plane* selon l'expression anglo-saxonne) de l'optique de focalisation 335, par exemple un objectif de microscope, le plan focal arrière pouvant être confondu ou proche de la pupille de l'objectif de microscope. Les optiques 331 et 332 constituent avantageusement un système afocal, de manière à ce que le faisceau collimaté issu du dispositif d'émission laser 310 soit collimaté en entrée de l'optique de focalisation 335.

Les optiques 331 et 332 sont typiquement des lentilles achromatiques, par exemple des doublets, permettant de minimiser à la fois les aberrations optiques mais aussi les aberrations chromatiques.

Avec des optiques 331, 332 achromatiques, il est possible d'utiliser un dispositif d'émission laser 310 émettant un faisceau lumineux dont la longueur d'onde principale peut être ajustée dans une large bande spectrale, typiquement plusieurs centaines de nanomètres, ou un faisceau lumineux présentant plusieurs longueurs d'onde principales.

L'ajustement de la longueur d'onde principale du faisceau lumineux en sortie du dispositif d'émission 310 peut par exemple être réalisé par le changement de la source 312, ou par l'utilisation de plusieurs sources lasers de longueurs d'onde différentes (non représentées sur la Fig. 3A) choisies au moyen d'un séparateur de faisceau.

L'utilisation de plusieurs sources de longueurs d'ondes principales différentes permet par exemple d'exciter la fluorescence d'un échantillon doté de marquages fluorescents de propriétés différentes. Par exemple, dans le cas de l'imagerie de cellules fluorescentes, il est possible d'effectuer une préparation spécifique des cellules en les dotant de protéines fluorescentes localisées selon des structures spécifiques. Selon ce même exemple, il est ainsi possible, avec une lumière d'excitation adaptée, d'obtenir à partir de telles cellules un signal de fluorescence provenant spécifiquement du noyau, par exemple lorsque la protéine fluorescente mCherry est présente de façon spécifique dans les structures nucléaires, et un signal provenant spécifiquement du cytoplasme, par exemple lorsque la protéine GFP est présente de façon spécifique dans la tubuline. La protéine mCherry émet une lumière de fluorescence rouge lorsqu'elle est excitée par un laser de longueur d'onde par exemple à 561 nm, et la protéine GFP émet une lumière de fluorescence verte lorsqu'elle est excitée par un laser de longueur d'onde par exemple à 488 nm. Ainsi, pour visualiser ces différentes structures cellulaires par exemple à l'aide d'une caméra collectant le signal de fluorescence, on pourra disposer deux sources lasers de longueurs d'onde principales différentes, ces deux sources lasers pouvant, dans des exemples de réalisation, exciter les protéines fluorescentes en même temps lorsqu'elles sont combinées grâce à un séparateur de faisceau dichroïque adapté.

Le dispositif de mesure et de correction d'un front d'onde tel que décrit dans la présente invention peut aussi bénéficier de l'utilisation de plusieurs sources lasers pour l'excitation de plusieurs marquages fluorescents d'un échantillon. En effet le signal de fluorescence issu par exemple d'un objet biologique ayant bénéficié d'une préparation spécifique telle que par exemple décrite précédemment, est d'une amplitude généralement faible. Il est ainsi la plupart du temps avantageux de minimiser les pertes du signal de fluorescence utilisé pour réaliser une image de l'objet d'intérêt. Dans le cas d'un dispositif de correction de front d'onde selon la présente description tel que décrit par exemple sur la Fig. 2, lorsque le signal de fluorescence est séparé par un séparateur de faisceau 235 conventionnel, c'est-à-dire sélectionnant la proportion de lumière transmise et réfléchie uniquement selon l'intensité de la lumière incidente et non selon d'autres caractéristiques telles que par exemple sa longueur d'onde ou sa polarisation, une partie du signal de fluorescence utile à la réalisation de l'image de l'objet d'intérêt est utilisée pour réaliser l'analyse du front d'onde à l'aide du sous-ensemble 240, et est ainsi perdue pour la réalisation de l'image. De manière à supprimer ces pertes, il est ainsi possible d'effectuer une préparation spécifique de l'objet d'intérêt en ajoutant un marquage fluorescent émettant une lumière de fluorescence selon un spectre décalé du spectre de la lumière de fluorescence utile pour la génération de l'image. Dans ce cas, une source laser supplémentaire dans le dispositif d'émission laser 310, excitant spécifiquement la fluorescence dans une bande spectrale d'analyse décalée par rapport à une bande spectrale d'imagerie, permet de disposer d'un signal de fluorescence pouvant être avantageusement dirigé vers le dispositif d'analyse de front d'onde 240 à l'aide d'un séparateur de faisceau dichroïque 235, sans induire - ou en minimisant - une perte de signal de fluorescence utile à la réalisation de l'image de l'objet d'intérêt. Dans ces différents cas de figure avec utilisation de plusieurs sources de longueurs d'onde différentes, le choix d'optiques 331 et 332 achromatiques permet d'assurer que les caractéristiques de focalisation du faisceau 341 issu de l'optique 335 sont sensiblement identiques.

Le dispositif de balayage angulaire 320 est typiquement un miroir galvanométrique, permettant une rotation de la surface réfléchissante du miroir selon un axe de rotation par exemple perpendiculaire à l'axe Δ₁, l'axe de rotation étant par exemple situé sur la surface du miroir. Le balayage angulaire effectué par le dispositif de balayage angulaire 320 permet ainsi un déplacement de la ligne de lumière 341 selon une direction perpendiculaire à Δ₁, direction représentée par la flèche en trait épais sur la Fig. 3A.

La feuille de lumière 340 est définie selon des exemples de réalisation, pour sa largeur par l'amplitude du balayage angulaire effectué par le dispositif de balayage angulaire 320, et pour sa longueur par la distance selon Δ₁ pour laquelle l'épaisseur de la ligne de lumière est sensiblement constante, par exemple à un facteur 2 près. Le centre de la feuille de lumière 340 est ainsi typiquement défini selon le premier axe par la position de la ligne de lumière correspondant au milieu de l'amplitude de balayage de 320 et selon le second axe par la position du col (ou « *waist* ») selon l'expression anglosaxonne) de la ligne de lumière 341. En effet, lorsque la source 312 est une source laser, les caractéristiques de propagation de la ligne de lumière 341 sont celles d'un faisceau gaussien. Ainsi, l'ouverture numérique du faisceau 341 est en particulier définie par le diamètre du faisceau en entrée de l'optique 335, ce diamètre pouvant être ajusté par le diaphragme 316. Il est ainsi possible de contrôler certaines caractéristiques de la feuille de lumière produite par la voie d'éclairage 301 en ajustant la taille du diaphragme 316, comme par exemple l'épaisseur de la feuille de lumière ainsi que la taille de la feuille de lumière 340 pour laquelle la feuille de lumière présente une épaisseur sensiblement constante.

Des mises en œuvre spécifiques de la voie d'éclairage 301 permettant des améliorations par exemple en termes de résolution d'image sont possibles. Par exemple il est possible d'utiliser des sources laser 312 ultrabrèves pour générer un signal de fluorescence non-linéaire comme un signal à 2 ou 3 photons, permettant de minimiser l'épaisseur de la ligne de lumière émettant un signal de fluorescence. Il est aussi possible d'implémenter une mise en forme spatiale spécifique de la ligne de lumière 341, par exemple par l'utilisation de faisceaux de type Bessel ou Airy permettant de générer une ligne de focalisation d'épaisseur constante sur une distance de propagation importante, typiquement plus importante que la taille du waist d'un faisceau gaussien.

Le principe général de fonctionnement d'une voie d'éclairage 301 correspondant à la présente description ainsi que plus de détails concernant son fonctionnement en régime de fluorescence linéaire ou non-linéaire, ainsi que pour différentes propriétés de la ligne de lumière 341 liées à des mises en forme particulières sont décrits en [Ref 7], par exemple pp. 143-153. L'approche d'éclairage selon la présente description est typiquement nommée *Digitally Scanned Laser Light-Sheet Fluorescence Microscopy* ou *DSLM,* selon l'expression anglo-saxonne.

La Fig. 3B illustre schématiquement un second exemple de réalisation d'un dispositif d'éclairage 302 d'un système d'imagerie de fluorescence avec éclairage par feuille de lumière selon la présente description. Le dispositif d'éclairage décrit en référence à la Fig. 3B est de type *Axially-Swept Light-Sheet Fluorescence Microscopy* ou *ASLM*, selon l'expression anglo-saxonne. Les détails de mise en œuvre de cette approche d'éclairage ainsi que des exemples d'images de fluorescence produites lorsque cette approche d'éclairage est réalisée dans un microscope par feuille de lumière sont par exemple décrits dans [Réf. 8].

Comme dans le cas de la Fig. 3A, le dispositif d'éclairage comprend un dispositif d'émission laser 310 pour l'émission d'un faisceau, par exemple un faisceau lumineux collimaté. Le dispositif d'émission laser 310 comprend comme expliqué précédemment une ou plusieurs sources de lumière 312, par exemple une source laser de type diode laser, ainsi que d'une lentille de collimation 314. Sur la Fig. 3B, une seule source 312 est représentée. Plusieurs sources de longueurs d'onde principales différentes et combinées à l'aide d'un séparateur dichroïque peuvent être utilisées de manière à permettre l'excitation de plusieurs signaux de fluorescence, comme cela a été détaillé en référence à la Fig. 3A. De la même manière, il est en outre possible d'utiliser différents types de source laser 312, comme par exemple une source laser ultrabrève permettant de générer un signal de fluorescence non-linéaire. Dans l'exemple de la Fig. 3B, le faisceau lumineux émis est par exemple polarisé. Le dispositif d'émission laser peut ainsi comprendre une lame demi-onde ou un polariseur 318, disposée en sortie de la source 312, de manière à définir un axe de polarisation du faisceau lumineux émis.

Le dispositif d'éclairage 302 comprend en outre dans l'exemple de la Fig. 3B une lentille cylindrique 351 permet de générer un faisceau astigmate, c'est-à-dire un faisceau pour lequel la lumière est focalisée dans le plan focal de la lentille 351 selon une ligne. Un séparateur de faisceau polarisant 352 permet de diriger en réflexion le faisceau astigmate vers une lame ¼ d'onde 361, puis vers une lentille 362 permettant une conjugaison de la ligne de focalisation dans le plan focal arrière d'un premier objectif de microscope 363. Le premier objectif de microscope 363, définissant un axe optique Δ₂, forme une ligne de focalisation sur la surface réfléchissante d'un miroir 366, le miroir 366 pouvant être déplacé selon l'axe optique Δ₂ à l'aide d'un système de translation linéaire 364, typiquement un système de translation motorisé et pilotable comme un actionneur piézoélectrique ou encore un moteur pas-à-pas. Un système optique relai de type focalisation à distance ou « *remote focusing* » selon l'expression anglo-saxonne, comprenant dans cet exemple le premier objectif de microscope 363 et un deuxième objectif de microscope 375 avec un axe optique colinéaire à l'axe optique du premier objectif de microscope 363, ainsi que des lentilles 362 et 371, permet de relayer le faisceau réfléchi sur le miroir 366 en sortie de l'objectif 375. Pour ce système optique, les lentilles 362 et 371 forment typiquement un système afocal et télécentrique, le foyer image de 362 étant confondu avec le foyer objet de 371, et les lentilles 362 et 371 étant agencées de manière à effectuer une conjugaison optique entre les plans pupillaires respectifs des objectifs 363 et 375, par exemple en positionnant le plan pupillaire de l'objectif 363 au plan focal objet de la lentille 362 et le plan pupillaire de l'objectif 375 au plan focal image de la lentille 371. Les deux objectifs de microscope 363 et 375 sont positionnés en sens opposé selon l'axe optique Δ₂. La particularité de ce système optique de type *remote focusing* réside dans sa capacité, lorsque les optiques sont choisies de manière spécifique, à réaliser l'image d'un objet situé devant l'un des objectifs de microscope devant l'autre objectif de microscope, et ce de manière quasiment dénuée d'aberrations, même si l'objet n'est pas situé dans le plan focal de l'objectif. Ainsi, dans le cas de la Fig. 3B, le ligne de focalisation créée par l'objectif 363 sur la surface réfléchissante du miroir 366 est imagée en aval du deuxième objectif de microscope 375, selon la ligne de lumière 341. De plus, lorsque le miroir 366 est déplacé selon l'axe optique Δ₂ à l'aide par exemple d'un dispositif de translation linéaire 364, les propriétés du système relais de type *remote focusing* permettent un déplacement de l'image 341 de la ligne de focalisation selon l'axe optique Δ₂, dans la même direction que 366, et ce sans modification significative des caractéristiques spatiales de la ligne de focalisation. Les déplacements respectifs du miroir 366 et de la ligne de focalisation 341 sont représentés sur la figure 3B à l'aide des deux flèches épaisses situées au-dessus de 364 et de 340. Une figure supplémentaire, selon une vue de dessus, permet de visualiser schématiquement le déplacement de la ligne de lumière de focalisation 341 selon l'axe Δ₂ lors du déplacement de 366. L'amplitude du déplacement de la ligne de lumière de focalisation 341 issue du déplacement de 366 permet de définir la taille de la feuille de lumière 340 créée par le déplacement de la ligne 341 selon l'axe Δ₂, la taille de la feuille de lumière 340 selon l'autre direction étant définie par la largeur de la ligne 341, elle-même directement liée à la taille du faisceau de sortie du dispositif d'émission laser 310. Comme pour la Fig. 3A, il est possible d'ajouter un diaphragme lorsqu'il est nécessaire contrôler la taille du faisceau en sortie du dispositif d'émission laser 310, diaphragme non représenté en 3B et représenté par 316 sur la Fig. 3A.

D'autres mises en œuvre d'une voie d'éclairage 302 selon un principe de type*ASLM* sont possibles, en particulier au moyen de l'utilisation de systèmes de contrôle de la focalisation du faisceau issu du deuxième objectif de microscope 375, différents du système de *remote focusing* décrit ci-dessus, comme par exemple l'utilisation de lentilles déformables, tel que cela est par exemple décrit dans [Réf. 9].

La Fig. 3C représente schématiquement une variation de l'exemple de réalisation d'un dispositif d'éclairage d'un système d'imagerie de fluorescence avec éclairage par feuille de lumière tel qu'illustré sur la Fig. 3B.

Comme décrit précédemment, les Fig. 3A et Fig. 3B illustrent des voies d'éclairage pour lesquelles, lorsqu'elles sont implémentées dans un système d'imagerie de fluorescence avec éclairage par feuille de lumière, l'objectif de microscope de la voie d'imagerie est typiquement positionné de manière perpendiculaire à l'objectif de microscope 335 (respectivement 375) du dispositif d'éclairage. En effet, puisque pour la majorité des systèmes d'imagerie de fluorescence avec éclairage par feuille de lumière, la feuille de lumière d'excitation est située dans un plan perpendiculaire à l'axe optique de l'objectif de microscope de la voie d'imagerie de manière à faire correspondre la feuille de lumière au plan focal de l'objectif de microscope de la voie d'imagerie, une mise en œuvre illustrée sur les Fig. 3A et Fig. 3B consiste à positionner les axes optiques Δ₁ et Δ₂ perpendiculaires à l'axe optique Δ de l'objectif de microscope de la voie d'imagerie. Dans ces exemples de réalisation, la taille maximale de la feuille de lumière selon les axes Δ₁ et Δ₂ respectivement, est limitée par le tirage, c'est-à-dire la distance entre la dernière surface optique de l'objectif de microscope 335 (respectivement 375) et son plan de focalisation, limitant ainsi la taille maximale des objets pouvant être imagés à l'aide de telles voies d'éclairage. La Fig. 3C illustre un autre mode de réalisation dans lequel l'axe optique Δ₂ de l'objectif de microscope 375 du dispositif d'éclairage n'est pas perpendiculaire à l'axe optique de l'objectif d'imagerie. Il est alors possible de créer une feuille de lumière d'excitation par le balayage d'une ligne de lumière de focalisation 341 produite selon une méthode similaire à celle décrite par exemple sur la Fig. 3B, cette ligne de lumière de focalisation 341 étant balayée non pas selon une direction parallèle à Δ₂, mais selon une direction permettant de définir une feuille de lumière 340 selon un plan perpendiculaire à l'axe optique de l'objectif de microscope d'imagerie, ceci par l'intermédiaire d'un dispositif de balayage de la ligne de lumière combinant à la fois une modification de la position axiale de la ligne de lumière de focalisation selon Δ₂ comme cela est décrit sur la Fig. 3B mais aussi une modification angulaire du faisceau de sortie de l'objectif de microscope 375, à l'aide par exemple d'un miroir galvanométrique (non représenté sur la Fig. 3C). Cette approche alternative permet ainsi de créer une feuille de lumière de taille supérieure à la limite de la taille des feuilles de lumière obtenues grâce aux dispositifs d'éclairage décrits au moyen des Fig. 3A et Fig. 3B, et ainsi de pouvoir générer des images d'objets de taille supérieure. Les détails de mise en œuvre de l'approche d'éclairage décrite sur la Fig. 3C sont par exemple décrits dans [Réf. 10].

Dans des exemples de réalisation, et notamment lorsqu'un dispositif d'éclairage de type DSLM, ou ASLM tels que décrits ci-dessus sont utilisés, on pourra utiliser pour la voie d'imagerie de fluorescence 202 du système d'imagerie de fluorescence avec éclairage par feuille de lumière (voir Fig. 2) un détecteur 220 configuré pour sélectionner uniquement la lumière issue de la ligne de lumière 341, et ainsi filtrer la lumière de fluorescence provenant d'autres parties du faisceau d'excitation permettant de générer la ligne de lumière 341. Par exemple, une caméra bidimensionnelle de type *rolling shutter,* selon l'expression anglo-saxonne, peut être utilisée. Dans une telle caméra, une lecture par ligne ou groupe de lignes (ou par colonne ou groupe de colonnes selon l'orientation) des pixels de la caméra est synchrone avec le balayage de la ligne de lumière 341.

Les Fig. 4A, Fig. 4B, Fig. 5A, Fig. 5B illustrent selon des exemples, des modes de réalisation de dispositifs de filtrage spatial de la lumière de fluorescence émise par le champ d'analyse, les dispositifs de filtrage spatial étant partie de dispositifs d'analyse de front d'onde selon la présente description. Dans ces exemples, le dispositif de filtrage spatial comprend un élément de filtrage agencé dans un plan de filtrage conjugué optiquement avec le plan de détection d'analyse PO₄ du dispositif d'analyse de front d'onde (voir Fig. 2), le filtrage spatial comprenant un balayage de l'élément de filtrage par rapport à une image de fluorescence de la ligne de lumière, formée dans le plan de filtrage, le balayage étant synchronisé avec le balayage de la ligne de lumière de telle sorte à obtenir une superposition, à chaque instant, de l'élément de filtrage et d'une image de fluorescence de la ligne de lumière. Le balayage de la ligne de lumière est réalisé par exemple par une des méthodes décrites au moyen des Fig. 3A, Fig. 3B ou Fig. 3C.

Les Fig. 4A et Fig. 4B illustrent schématiquement deux premiers exemples de réalisation d'un dispositif de filtrage spatial comprenant une fente mobile, le filtrage spatial de la lumière de fluorescence émise par le champ d'analyse comprenant un déplacement transversal de la fente, synchronisé avec le balayage de la ligne de lumière.

Plus précisément, dans l'exemple de la Fig. 4A, le dispositif de filtrage spatial comprend une fente 40 mobile déplacée de manière synchrone avec le balayage de la ligne de lumière. Ainsi, La Fig. 4A illustre, à différents instants, la superposition de l'image de fluorescence de la ligne de lumière, schématisée par des lignes 411 - 415, avec la fente dont la position est schématisée aux mêmes instants par les traits 401 - 405. Les flèches sur la Fig. 4A indiquent respectivement les déplacements de l'image de fluorescence de la ligne de lumière (trait fin) et de la fente (trait épais).

La fente 40 est positionnée dans un plan de filtrage optiquement conjugué avec le plan focal PO₁ de l'objectif de microscope d'imagerie lorsque le dispositif de correction de front d'onde (230, Fig. 2) est connecté au système d'imagerie microscopique.

Le dispositif de filtrage spatial comprend en outre des moyens de déplacement transversal de la fente 40, c'est-à-dire dans un plan perpendiculaire à l'axe optique, les dits moyens de déplacement comprenant par exemple un système de translation motorisée, par exemple un moteur de type pas-à-pas ou piézoélectrique.

La fente 40 peut être une fente en transmission, et comprend par exemple une surface transparente décrivant une ligne de largeur donnée, entourée d'un cadre opaque à la lumière de fluorescence, ou en réflexion, et comprend par exemple une surface réfléchissante décrivant une ligne de largeur donnée.

La plus grande dimension de la fente 40, c'est-à-dire la longueur, peut être choisie de manière à limiter la taille de l'image produite par chaque microlentille du dispositif d'analyse de front d'onde selon la direction correspondant à la longueur de la fente, de manière à éviter le recouvrement des images produites par les différentes microlentilles du dispositif d'analyse de front d'onde selon cette même direction. La plus petite dimension de la fente 40, c'est-à-dire la largeur, peut être choisie de manière à effectuer un compromis entre le volume confocal défini par cette largeur, c'est-à-dire le volume dans l'échantillon pour lequel les photons ne sont pas bloqués par la fente et peuvent être détectés par le dispositif d'analyse de front d'onde, la perte de lumière engendrée par le filtrage spatial, perte directement proportionnelle à la largeur de la fente, et la capacité de la fente à ne pas filtrer, en particulier lorsque sa largeur est trop petite, les aberrations de la lumière de fluorescence devant être mesurées par le dispositif d'analyse de front d'onde pour être ensuite corrigées par le dispositif de modulation de front d'onde. Pour répondre à ce compromis, les déposants ont montré qu'une largeur de fente peut être avantageusement comprise entre une valeur minimale et une valeur maximale. La valeur minimale est par exemple égale à la limite de diffraction, avantageusement deux fois la limite de diffraction, de l'objectif de microscope d'imagerie multipliée par le grandissement optique entre le plan focal de l'objectif de microscope d'imagerie et le plan de filtrage dans lequel est agencée la fente 40. La valeur maximale est par exemple égale à la largeur de la zone de Rayleigh correspondant au faisceau gaussien générant la ligne de lumière de fluorescence et multipliée par le grandissement optique entre le plan focal de l'objectif de microscope d'imagerie et le plan de filtrage dans lequel est agencée la fente 40.

Dans l'exemple de la Fig. 4B, le dispositif de filtrage spatial comprend un dispositif de modulation spatiale d'intensité 420 agencé dans un plan de filtrage optiquement conjugué avec le plan focal PO₁ de l'objectif de microscope d'imagerie lorsque le dispositif de correction de front d'onde (230, Fig. 2) est connecté au système d'imagerie microscopique. Le dispositif de modulation spatiale d'intensité 420 est piloté de façon synchrone avec le balayage de la ligne de lumière pour adresser un groupe d'une ou plusieurs ligne(s) (ou colonne(s)) de telle sorte à former une fente qui, à chaque instant, est superposée à une image de fluorescence de la ligne de lumière formée dans le plan de filtrage.

Par exemple, le dispositif de modulation spatiale d'intensité 420 comprend une matrice de micromiroirs *ou* « *Digital Micromirror Device* » (DMD) selon l'expression anglo-saxonne. Un DMD comprend une matrice bidimensionnelle de micromiroirs pilotés individuellement en orientation selon plusieurs angles. Un faisceau incident sur un DMD peut ainsi être réfléchi selon un motif d'intensité directement lié aux positions individuelles des micromiroirs. Il est ainsi possible de piloter le DMD de manière à orienter un groupe d'une ou plusieurs ligne(s) (ou colonne(s)) de micromiroirs selon une direction permettant à l'analyseur de front d'onde de collecter la lumière réfléchie par ce groupe d'une ou plusieurs ligne(s) (ou colonne(s)), le groupe d'une ou plusieurs ligne(s) (ou colonne(s)) de micromiroirs étant déplacé dans le temps de manière synchrone au balayage de la ligne de lumière et dans la même direction que le déplacement de la ligne de lumière.

La synchronisation du pilotage du DMD avec le balayage de la ligne de lumière permet ainsi de superposer à chaque instant, comme cela est illustré sur la Fig. 4B, l'image de fluorescence de la ligne de lumière (411 - 415) avec le groupe d'une ou plusieurs ligne(s) (ou colonne(s)) de micromiroirs du DMD qui est adressée, le un groupe d'une ou plusieurs ligne(s) (ou colonne(s)) étant symbolisé par les colonnes 421 - 425. Sur la Fig. 4B, les flèches indiquent respectivement les déplacements au cours du temps de l'image de fluorescence de la ligne de lumière (trait fin) et du groupe d'une ou plusieurs ligne(s) (ou colonne(s)) adressé (trait épais).

Les longueur et largeur du groupe d'une ou plusieurs ligne(s) (ou colonne(s)) de micromiroirs peuvent être choisies selon les même critères que ceux décrits en référence avec la Fig. 4A. Cependant, pour un dispositif de modulation spatiale d'intensité de type DMD, puisque la taille d'un micromiroir individuel ne peut être généralement réalisée sur mesure, il peut être avantageux pour ajuster finement l'efficacité du système de filtrage spatial d'ajuster les grandissements issus des différents groupes d'optiques dans un dispositif de correction de front d'onde selon la présente description.

Les Fig. 5A et Fig. 5B illustrent schématiquement deux deuxièmes exemples 51, 52, de réalisation d'un dispositif de filtrage spatial comprenant un élément de filtrage avec cette fois-ci une fente fixe, référencée 510 sur les Fig. 5A et Fig. 5B et agencée dans un plan de filtrage PO₆ optiquement conjugué avec un plan focal objet PO₁ de l'objectif de microscope d'imagerie. Le dispositif de filtrage comprend en outre un ensemble d'éléments optiques dont au moins un premier miroir (512, 522) mobile en rotation, l'ensemble d'éléments optiques étant configuré pour générer une image de fluorescence de la ligne de lumière sur la fente et des moyens de rotation dudit au moins un premier miroir mobile, synchronisé avec le balayage de la ligne de lumière, pour superposer, à chaque instant, la fente et l'image de fluorescence de la ligne de lumière.

Plus précisément, dans l'exemple de la Fig. 5A, le plan PO₅ correspond à un plan optiquement conjugué avec un plan focal objet PO₁ de l'objectif de microscope d'imagerie et qui se trouve ainsi compris dans une feuille de lumière produite par balayage d'une ligne de lumière, par exemple au moyen d'un dispositif d'éclairage tel que décrit précédemment. Le balayage d'une image de fluorescence de la ligne de lumière est représenté schématiquement dans le plan PO₅ sur la Fig. 5A, par plusieurs images de lignes de lumière vues selon un plan de coupe perpendiculaire à leur axe, la direction de balayage étant schématisée par une flèche en trait épais. L'ensemble d'éléments optiques dans l'exemple de la FIG. 5A comprend des groupes de lentilles 511 et 514 d'une part, et 515 et 518 d'autre part, formant par exemple des systèmes optiques afocaux et télécentriques. Ces groupes de lentilles comprennent par exemple des lentilles achromatiques comme par exemples des doublets. L'ensemble d'éléments optiques dans l'exemple de la FIG. 5A comprend également des miroirs 512, 513, 516, 517, dont, dans cet exemple, des miroirs mobiles en rotation 512 et 517, par exemple des miroirs galvanométriques, agencés dans des plans pupillaires PP₄ et PP₅ respectivement. Les miroirs sont par exemple orientés à 45° de l'axe optique du dispositif de filtrage spatial, renvoyant la lumière à 90° par réflexion. Les miroirs de repli fixes 513 et 516, par exemple orientés à 45° de l'axe optique, permettent de replier l'axe optique selon une direction permettant par exemple de conserver un axe optique majoritairement selon une unique direction pour le dispositif de filtrage spatial. Ces miroirs de repli sont par exemple des miroirs dotés d'un traitement de type métallique fournissant une réflectivité importante sur une très large bande spectrale, ou dotés d'un traitement de type diélectrique fournissant une réflectivité supérieure à celle du traitement métallique mais sur une bande spectrale restreinte.

Le groupe constitué des lentilles 511 et 514 permet de réaliser une conjugaison optique entre les plans PO₅ et PO₆, et le groupe constitué des lentilles 515 et 518 permet de réaliser une conjugaison optique entre le plan PO₆ et un plan focal intermédiaire PO₇, lui- même conjugué avec le plan de détection d'analyse PO₄ du détecteur 248 du dispositif d'analyse de front d'onde au moyen de la lentille 242 et des microlentilles de la matrice de microlentilles agencée dans le plan pupillaire PP₃ (voir aussi Fig. 2). Le plan pupillaire PP₄ sur la Fig. 5A est un plan conjugué optiquement du plan pupillaire PP₁ de l'objectif de microscope d'imagerie 210 (voir Fig. 2). Lorsque le dispositif de correction de front d'onde est connecté au système d'imagerie microscopique, la conjugaison optique entre les plan pupillaire PP₁ et PP₄ est réalisée par exemple à l'aide des lentilles 212, 231 241 (voir Fig. 2) et 511. Les plans pupillaires PP₅ et PP₄ sont des plans conjugués optiquement avec le plan PP₃, la conjugaison entre PP₄ et PP₅ est réalisée par les lentilles 514 et 515 formant un système afocal et télécentrique, et la conjugaison entre PP₅ et PP₃ est réalisée par les lentilles 518 et 242 formant un système afocal et télécentrique, ces 2 systèmes afocaux et télécentriques comprenant par exemple des doublets achromatiques. Ainsi les plans PO₄, PO₅, PO₆ et PO₇ sont optiquement conjugués entre eux et avec le plan focal de l'objectif de microscope d'imagerie PO₁ représenté sur la Fig. 2, et les plans pupillaires PP₃, PP₄ et PP₅ sont optiquement conjugués entre eux et avec le plan pupillaire PP₁ de l'objectif de microscope d'imagerie 210 représenté sur la Fig. 2. La fente fixe 510 agencée dans le plan PO₆ présente une longueur (plus grande dimension), parallèle à l'axe de l'image de fluorescence de la ligne de lumière. Lors du balayage de la ligne de lumière effectué par la voie d'éclairage, le premier miroir mobile 512 effectue un balayage angulaire de manière synchrone au balayage de la ligne de lumière, et dont l'amplitude est ajustée de manière à réaliser une image fixe de la ligne de lumière au niveau de la fente 510. Ainsi, en chaque instant du balayage de la ligne de lumière, la fente 510 réalise un filtrage spatial confocal en ligne du signal de fluorescence issu de la ligne de lumière. Il en résulte que la lumière de fluorescence transmise par la fente provient uniquement d'un volume confocal défini par les caractéristiques de la fente, ce qui permet de réduire le signal de fluorescence provenant de plans différents du plan d'imagerie de l'objectif de microscope d'imagerie 210 (Fig. 2), mais aussi de réduire l'épaisseur de la ligne de lumière transmise.

Toujours lors du balayage de la ligne de lumière effectuée par la voie d'éclairage, le second miroir mobile 517 effectue un balayage angulaire synchrone du balayage de la ligne de lumière et du balayage du premier miroir mobile 512, permettant de reconstituer l'image de fluorescence produite par la succession temporelle des images de fluorescence de la ligne de lumière produites par le balayage de la ligne de lumière, dans le plan focal intermédiaire PO₇ conjugué avec le plan de détection d'analyse, à partir de la succession temporelle des images de fluorescence des lignes de lumière situées au niveau de la fente 510. Cette image de fluorescence reconstruite est ensuite imagée à l'aide des optiques 242 et de la matrice de microlentilles située en PP₃ sur le détecteur 248 situé dans PO₄ du dispositif de front d'onde selon la présente description. Le détecteur 248 permet ainsi de détecter une image constituée de multiples images de fluorescence de l'objet agencées selon un arrangement similaire à l'arrangement des microlentilles en PP₃, cette image permettant d'en déduire un front d'onde par un calcul de déviation relative des images entre elles selon une méthode telle que décrite précédemment, par exemple une méthode de calcul d'intercorrélation.

Les dimensions de la fente 510 peuvent être choisies de la même manière que celles de la fente décrite en référence à la Fig. 4A.

Dans l'exemple de la Fig. 5B, les optiques 521, 523, 526 et 527 sont les équivalents respectifs des optiques 511, 514, 515 et 518 de la Fig. 5A, et possèdent des caractéristiques sensiblement similaires. Les différentes conjugaisons de plans identifiées par les mêmes références, sont similaires à celles décrites sur la Fig. 5A. Dans cette mise en œuvre, un unique miroir mobile en rotation 522, par exemple un miroir galvanométrique du même type que les miroirs 512 et 517 de la Fig. 5A, est utilisé. Les miroirs de repli 524 et 525, du même type que les miroirs 513 et 516 de la Fig. 5A, sont positionnés de manière à renvoyer la lumière vers le miroir mobile 522.

Ainsi, lors du balayage de la ligne de lumière effectué par la voie d'éclairage, le miroir mobile en rotation 522 effectue un balayage angulaire de manière synchrone au balayage de la ligne de lumière, et dont l'amplitude est ajustée de manière à réaliser une image fixe de la ligne de lumière au niveau de la fente 510, en particulier par réflexion sur le premier miroir de repli 524. Le second miroir de repli 525 est orienté de manière à renvoyer la lumière filtrée spatialement par la fente 510 vers le miroir mobile en rotation 522, ce miroir effectuant ainsi un second balayage permettant de reconstituer l'image de fluorescence produite par la succession temporelle des images de fluorescence de la ligne de lumière produites par le balayage de la ligne de lumière, dans le plan focal intermédiaire PO₇ conjugué avec le plan de détection d'analyse, à partir de la succession temporelle des lignes de fluorescence situées au niveau de la fente 510. Les critères de choix concernant les caractéristiques de la fente 510, et en particulier sa largeur, sont similaires à celles décrites en référence à la Fig. 4A ou à la Fig. 5A.

Le dispositif de filtrage spatial 52 constitue une variation avantageuse du dispositif de filtrage spatial 51, puisqu'il permet l'utilisation d'un seul miroir mobile en rotation. Cela permet de rendre la mise en œuvre optomécanique du dispositif de filtrage spatial 52 plus compacte que celle du dispositif de filtrage spatial 51, de minimiser la perte de performance potentielle du dispositif de filtrage spatial 51 liée à d'éventuels défauts d'alignement et de synchronisation, tout en réduisant le coût de l'implémentation.

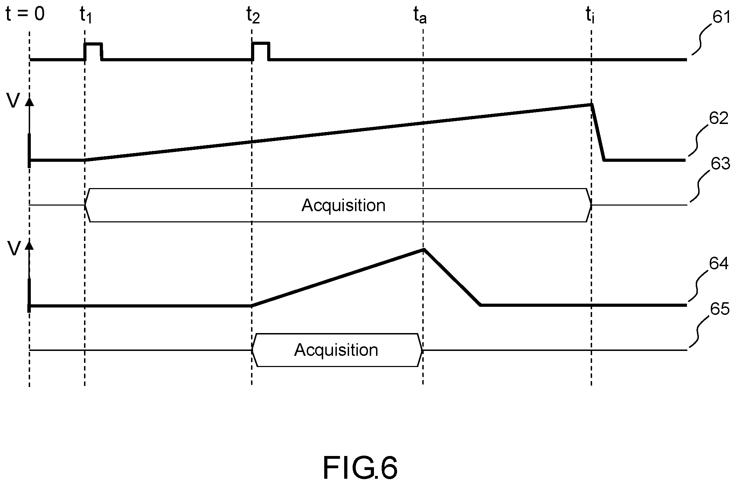

La Fig. 6 illustre schématiquement et selon un exemple donné à titre illustratif, un diagramme de synchronisation des principaux modules d'un système d'imagerie microscopique selon la présente description, par exemple, mais non limitativement, des modules décrits au moyen des Fig. 2 à Fig. 5B.

Comme illustré sur la Fig. 6, le signal 61 correspond à un signal d'horloge, configuré pour le déclenchement des détecteurs d'imagerie et d'analyse (respectivement 220 et 248, Fig. 2), du système de balayage de la ligne de lumière de la voie d'éclairage et du système de balayage du dispositif de filtrage spatial tel que décrit dans la présente description. Le signal de déclenchement comprend dans cet exemple 2 créneaux logiques de tension, un premier créneau démarrant par exemple en son front montant selon le temps t₁ et un second créneau démarrant par exemple en son front montant selon le temps t₂, t₂ étant par exemple décalé temporellement de t₁.

Le signal 62 correspond dans cet exemple à un signal de contrôle du balayage de la ligne de lumière de la voie d'éclairage. Dans l'exemple de la Fig. 6, ce signal est une rampe de tension, et correspond par exemple au signal envoyé au miroir mobile en rotation de type galvanométrique 320 de la Fig. 3A, ou encore au signal envoyé au système de translation motorisé de type piézoélectrique 364 de la Fig. 3B permettant de déplacer le miroir 366, pour effectuer le balayage de la ligne de lumière. La tension reçue par ce type de dispositif mobile permet en effet de contrôler directement l'angle de rotation ou la translation dudit dispositif mobile. Ainsi, un balayage de la ligne de lumière est réalisé entre les temps t₁ et tᵢ correspondant aux niveaux bas et haut de ladite rampe de tension pour générer une feuille de lumière correspondant à un champ d'imagerie.

Le signal 63 représente schématiquement la période temporelle durant laquelle est réalisée l'acquisition de l'image d'un objet d'intérêt, par exemple à l'aide du détecteur d'imagerie 220 dans l'exemple de réalisation de la Fig. 2.

Le signal 64 correspond à un exemple d'un signal de contrôle du balayage du dispositif de filtrage spatial tel que décrit dans la présente description. Par exemple, le signal 64 est une rampe de tension, et correspond par exemple au signal envoyé aux miroirs mobiles en rotation de type galvanométrique 512 et 517 de la Fig. 5A et 522 de la Fig. 5B, la tension reçue par ce type de miroir permettant de contrôler directement l'angle de rotation dudit miroir. Ainsi un balayage du champ d'analyse est réalisé entre les temps t₂ et tₐ correspondant aux niveaux bas et haut de ladite rampe de tension du signal 64. Le signal 64 peut prendre d'autres formes, selon qu'il s'agit de piloter d'autres types de systèmes de balayage. Ainsi, le signal 64 peut prendre d'autres formes, selon qu'il s'agit de piloter un système de translation linéaire d'une fente mobile 40 dans la figure 4A ou un système de pilotage des colonnes d'un dispositif de modulation spatiale de l'intensité de type DMD dans la figure 4B, ou tout autre système pilotable permettant d'effectuer le balayage du dispositif de filtrage spatial tel que décrit dans la présente description.

Le signal 65 représente schématiquement la période temporelle durant laquelle est réalisée l'acquisition du champ d'analyse du dispositif d'analyse de front d'onde selon la présente invention, par exemple à l'aide du détecteur d'analyse 248 (Fig. 2). Les signaux en tension 61, 62 et 64 sont par exemple réalisés à l'aide d'un système électronique de synchronisation, comme par exemple une carte électronique d'entrée/sortie permettant de disposer à la fois d'une sortie logique générant des signaux du type de celui représenté à la ligne 61 et de deux sorties de type analogique générant des signaux du type de ceux représentés aux lignes 62 et 64, ces différentes sorties pouvant être contrôlées précisément en temps les unes par rapport aux autres par ledit système électronique de synchronisation.

Le système électronique de synchronisation peut former une unité de l'unité de traitement 250.

Ainsi, au temps t₁, le premier créneau de déclenchement du signal 61 permet de déclencher de manière synchrone l'émission des signaux 62 et 63, le balayage de la ligne de lumière de la voie d'éclairage contrôlée par le signal 62 et l'acquisition par le détecteur d'imagerie (220, Fig. 2) s'effectuant pendant la même durée tᵢ-t₁. Ceci permet, avec un réglage adéquat de l'amplitude et de la vitesse du balayage de la ligne de lumière de la voie d'éclairage d'assurer que la totalité du champ d'imagerie est couverte par le balayage de la voie d'éclairage.

Ceci permet par exemple de bénéficier du mode de lecture dit *rolling shutter* selon l'expression anglo-saxonne typiquement présent sur les caméras d'imagerie de fluorescence de dispositifs d'imagerie de fluorescence par feuille de lumière, permettant l'intégration de colonnes de pixels de la caméra de manière séquentielle et synchrone du balayage de la ligne de lumière, ce qui permet de bénéficier d'une détection de type confocale au niveau de la caméra.

A l'instant t₂, le second créneau de déclenchement du signal 61 permet de déclencher de manière synchrone les signaux 64 et 65, le balayage du ou des miroirs mobiles en rotation du système de filtrage spatial contrôlés par le signal 64 et l'acquisition du détecteur d'analyse (248, Fig. 2) du dispositif d'analyse de front d'onde contrôlée par le signal 65 s'effectuant selon la même durée tₐ-t₂. Ceci permet, avec un réglage adéquat de l'amplitude et de la vitesse du balayage du ou des miroirs mobiles en rotation du système de filtrage spatial d'assurer que la totalité du champ d'analyse bénéficie de l'effet du système de filtrage spatial.

Dans le dispositif selon la présente invention, la taille du champ d'analyse défini par l'analyseur de front d'onde est généralement significativement inférieure à la taille du champ d'imagerie défini par la caméra d'imagerie. Il est ainsi avantageux de démarrer l'acquisition de l'image du champ d'analyse et le balayage du dispositif de balayage du système de filtrage spatial après un délai par rapport au démarrage de l'acquisition de l'image du champ d'imagerie. Ce délai, t₂ - t₁, est ajusté au niveau du système électronique de synchronisation, en prenant en compte les caractéristiques de vitesse et d'amplitude du balayage de la voie d'éclairage, de manière à faire correspondre l'instant t₂ avec le moment pour lequel la ligne de lumière balayée est située selon un premier bord du champ d'analyse.

L'ensemble des signaux décrits en Fig. 6 correspond à une séquence d'acquisition dans un système d'imagerie microscopique selon la présente description. Evidemment, cette séquence peut être répétée au cours du temps pour l'acquisition séquentielle d'images et de mesures du front d'onde. Par ailleurs, d'autres séquences d'acquisition sont possibles en fonction des caractéristiques des modules du système d'imagerie microscopique.

Bien que décrite à travers un certain nombre d'exemples de réalisation, le dispositif d'analyse de front d'onde et les systèmes et procédés d'imagerie microscopique utilisant le dispositif d'analyse de front d'onde comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### REFERENCES BIBLIOGRAPHIQUES

[Réf. 1] : M. J. Booth et al. « Adaptive optics for fluorescence microscopy », extrait de l'ouvrage « Fluorescence Microscopy : Super-resolution and other Novel Techniques », A. Cornea et al., Academic Press, 2014.
[Réf. 2] : N. Ji « Adaptive optical fluorescence microscopy », Nature Methods 14, 374-380, 2017.
[Réf. 3] : Brevet US855730 B2
[Réf. 4] : Demande de brevet publiée US 2015/0362713
[Réf. 5] : K. Lawrence et al. « Scene-based Shack-Hartmann wavefront sensor for light-sheet microscopy », Proc. SPIE 10502, Adaptive Optics and Wavefront Control for Biological Systems IV, 2018
[Réf. 6] : Demande de brevet publiée WO2020/157265
[Réf. 7] : O.E. Olarte et al., Light-Sheet microscopy : a tutorial, Advances in Optics and Photonics, Vol.10, n°1 (2018)
[Réf. 8] Dean et al., Deconvolution-free subcellular imaging with axially swept light sheet microscopy, Biophysical Journal, 108, 2807-2815, 2015
[Réf. 9] Hedde et al. , Selective Plane Illumination Microscopy with a Light Sheet of uniform thickness formed by an electrically tunable lens, Microscopy Research and Technique (2016)
[Réf. 10] Migliori et al., Light-Sheet theta microscopy for rapid high-resolution imaging of large biological samples, BMC Biology 16 :57, 2018.
[Réf. 11] A. Hubert et al.: « Adaptive optics light-sheet microscopy based on direct wavefront sensing without any guide star", Optics Letters, vol. 44, n°. 10, 15 may 2019, pages 2514 - 2517.

## Revendications

1. Procédé d'imagerie microscopique de fluorescence d'un objet volumique et fluorescent (10) au moyen d'un système (200) d'imagerie microscopique de fluorescence avec éclairage par feuille de lumière, ledit système comprenant un objectif de microscope d'imagerie (210) avec une pupille (211) dans un plan pupillaire (PP₁) et un axe optique (Δ), le procédé comprenant :
- l'éclairage par feuille de lumière de l'objet au moyen d'une voie d'éclairage (201) comprenant un dispositif d'éclairage (205), l'éclairage comprenant la génération d'une ligne de lumière et le balayage de la ligne de lumière dans un plan d'éclairage sensiblement perpendiculaire à l'axe optique de l'objectif de microscope d'imagerie pour générer une feuille de lumière (100), un plan focal (PO₁) dudit objectif de microscope d'imagerie étant compris dans ladite feuille de lumière, ladite feuille de lumière générant une émission de lumière de fluorescence par l'objet;
- la génération, au moyen d'une voie d'imagerie (202) comprenant ledit objectif de microscope d'imagerie (210) et un détecteur d'imagerie (220) comprenant un plan de détection d'imagerie (PO₃), d'au moins une première image de fluorescence d'une section optique de l'objet superposée au plan focal (PO₁) dudit objectif de microscope d'imagerie, ladite au moins une première image de fluorescence étant générée dans une bande spectrale d'imagerie;
- l'analyse d'un front d'onde de la lumière de fluorescence émise par l'objet au moyen d'une voie d'analyse (203) comprenant ledit objectif de microscope d'imagerie et un dispositif d'analyse d'un front d'onde (240), le dispositif d'analyse d'un front d'onde comprenant un détecteur bidimensionnel (248) avec un plan de détection d'analyse (PO₄) conjugué avec ledit plan focal de l'objectif de microscope d'imagerie et un arrangement bidimensionnel (243) de microlentilles (244), agencé dans un plan d'analyse (PP₃) conjugué avec ledit plan pupillaire (PP₁), ladite analyse d'un front d'onde comprenant :
- la génération par chaque microlentille, sur le plan de détection d'analyse, d'une image de fluorescence d'un champ d'analyse donné de l'objet, situé dans un plan focal (PO₁) de l'objectif de microscope d'imagerie, ladite image de fluorescence étant générée dans une bande spectrale d'analyse;
- le filtrage spatial de la lumière de fluorescence émise par ledit champ d'analyse au moyen d'un dispositif de filtrage spatial (245) comprenant un élément de filtrage agencé dans un plan de filtrage conjugué optiquement avec le plan de détection d'analyse (PO₄), le filtrage spatial comprenant un balayage dudit élément de filtrage par rapport à une image de fluorescence de ladite ligne de lumière formée dans ledit plan de filtrage, synchronisé avec ledit balayage de la ligne de lumière, de telle sorte à obtenir une superposition, à chaque instant, dudit élément de filtrage et de ladite image de fluorescence de la ligne de lumière;
- le traitement des images de fluorescence générées par les microlentilles au moyen d'une unité de traitement (250) pour déterminer une carte bidimensionnelle d'un paramètre caractéristique du front d'onde dans ledit plan d'analyse
- la correction à partir de la carte bidimensionnelle d'un paramètre caractéristique du front d'onde, d'au moins une partie des défauts optiques entre ladite section optique de l'objet et ledit plan de détection d'imagerie (PP₁), au moyen d'un dispositif (232) de modulation de front d'onde comprenant un plan de correction conjugué avec le plan pupillaire (PP₁).

2. Procédé d'imagerie microscopique de fluorescence selon la revendication 1, dans lequel l'élément de filtrage comprend une fente mobile (40, 425) et le filtrage spatial de la lumière de fluorescence émise par ledit champ d'analyse comprend un déplacement transversal de ladite fente, synchronisé avec le balayage de la ligne de lumière.

3. Procédé d'imagerie microscopique de fluorescence selon la revendication 1, dans lequel
- l'élément de filtrage comprend une fente fixe (510) et le dispositif de filtrage spatial comprend en outre un ensemble d'éléments optiques dont au moins un premier miroir (512, 522) mobile en rotation, l'ensemble d'éléments optiques étant configuré pour générer une image de fluorescence de la ligne de lumière sur la fente, le filtrage spatial de la lumière de fluorescence émise par ledit champ d'analyse comprenant :
- une rotation dudit au moins un premier miroir mobile, synchronisé avec le balayage de la ligne de lumière, pour superposer, à chaque instant, ladite fente et ladite image de fluorescence de ladite ligne de lumière.

4. Procédé d'imagerie microscopique de fluorescence selon l'une quelconque des revendications précédentes, dans lequel le dispositif d'éclairage de la voie d'éclairage comprend un dispositif d'émission laser (310) pour l'émission d'un faisceau lumineux et un système optique d'éclairage avec un axe optique d'éclairage (Δ₁), le système optique d'éclairage étant configuré pour générer une ligne de lumière (341) à partir dudit faisceau lumineux parallèle à l'axe optique d'éclairage, la feuille de lumière (340) étant générée par balayage de la ligne de lumière dans une direction perpendiculaire à l'axe optique.

5. Procédé d'imagerie microscopique de fluorescence selon l'une quelconque des revendications 1 à 3, dans lequel le dispositif d'éclairage de la voie d'éclairage comprend un dispositif d'émission laser (310) pour l'émission d'un faisceau lumineux et un système optique d'éclairage avec un axe optique d'éclairage (Δ₂) configuré pour générer une ligne de lumière (341) à partir dudit faisceau lumineux perpendiculaire à l'axe optique d'éclairage, la feuille de lumière étant générée par balayage de la ligne de lumière.

6. Procédé d'imagerie microscopique de fluorescence selon l'une quelconque des revendications précédentes, dans lequel :
- la détermination de ladite carte bidimensionnelle comprend la détermination de variations des positions des images de fluorescence formées par les microlentilles, la variation de position d'une image de fluorescence formée par une microlentille étant mesurée par rapport à une position de référence d'une image de référence, la variation de position étant déterminée par une opération entre ladite image et ladite image de référence, ladite opération étant choisie parmi : une intercorrélation, une corrélation de phase, une somme des différences au carré.

7. Dispositif (230) de correction de front d'onde, configuré pour être connecté à un système d'imagerie microscopique de fluorescence avec éclairage par feuille de lumière pour la mise en œuvre d'un procédé selon l'une quelconque des revendications 1 à 6, ledit système d'imagerie microscopique de fluorescence comprenant une voie d'imagerie comprenant un objectif de microscope d'imagerie (210) avec une pupille (211) dans un plan pupillaire (PP₁) et un axe optique (Δ), et comprenant un détecteur d'imagerie avec un plan de détection d'imagerie (PO₃), et une voie d'éclairage comprenant un dispositif d'éclairage (205) configuré pour le balayage d'une ligne de lumière dans un plan d'éclairage sensiblement perpendiculaire à l'axe optique pour générer une feuille de lumière (100), le dispositif de correction de front d'onde comprenant :
- un dispositif (240) d'analyse de front d'onde comprenant :
- un détecteur bidimensionnel (248) comprenant un plan de détection d'analyse (PO₄);
- un arrangement bidimensionnel (243) de microlentilles (244), agencé dans un plan d'analyse (PP₃), chaque microlentille étant configurée pour générer sur le plan de détection d'analyse, lorsque le dispositif de correction de front d'onde est connecté au système d'imagerie microscopique, une image de fluorescence d'un champ d'analyse donné de l'objet, situé dans un plan focal (PO₁) de l'objectif de microscope d'imagerie, ladite image de fluorescence étant générée dans une bande spectrale d'analyse;
- un dispositif de filtrage spatial (245) configuré pour le filtrage spatial de la lumière de fluorescence émise par ledit champ d'analyse lorsque le dispositif de correction de front d'onde est connecté au système d'imagerie microscopique, le dispositif de filtrage spatial comprenant un élément de filtrage agencé dans un plan de filtrage (PO₅, PO₆) conjugué optiquement avec le plan de détection d'analyse (PO₄) et des moyens de balayage configurés pour le balayage dudit élément de filtrage par rapport à une image de fluorescence de ladite ligne de lumière formée dans ledit plan de filtrage, synchronisé avec ledit balayage de la ligne de lumière, de telle sorte à obtenir une superposition, à chaque instant, dudit élément de filtrage et de ladite image de fluorescence de la ligne de lumière;
- une unité de traitement (250) configurée pour déterminer à partir de l'ensemble des images formées par les microlentilles une carte bidimensionnelle d'un paramètre caractéristique du front d'onde dans ledit plan d'analyse ; le dispositif de correction de front d'onde comprenant en outre :
- un dispositif (232) de modulation de front d'onde comprenant un plan de correction (PP₂), configuré pour la correction à partir de la carte bidimensionnelle d'un paramètre caractéristique du front d'onde, au moins une partie des défauts optiques entre ladite section optique de l'objet et ledit plan de détection d'imagerie (PO₃), lorsque le dispositif de correction de front d'onde est connecté au système d'imagerie microscopique;
- un premier système optique relai (231, 241, 242) configuré pour conjuguer optiquement le plan pupillaire (PP₁), le plan de correction (PP₂) et le plan d'analyse (PP₃), lorsque le dispositif de correction de front d'onde est connecté au système d'imagerie microscopique ;
- un deuxième système optique relai (231, 236, 241, 242) configuré pour conjuguer optiquement le plan focal (PO₁) de l'objectif de microscope d'imagerie, le plan de détection d'analyse (PO₄), le plan de détection d'imagerie (PO₃) et le plan de filtrage (PO₅, PO₆), lorsque le dispositif de correction de front d'onde est connecté au système d'imagerie microscopique.

8. Dispositif (230) de correction de front d'onde selon la revendication 7, dans lequel l'élément de filtrage du dispositif de filtrage confocal comprend une fente mobile (40, 425), et les moyens de balayage sont configurés pour générer un déplacement transversal de ladite fente, synchronisé avec le balayage de la ligne de lumière.

9. Dispositif (230) de correction de front d'onde selon la revendication 8, dans lequel ladite fente mobile est formée par un élément optomécanique mobile (40) configuré pour la transmission ou la réflexion de la lumière de fluorescence.

10. Dispositif (230) de correction de front d'onde selon la revendication 8, dans lequel ladite fente mobile est formé par l'adressage d'un groupe d'une ou plusieurs ligne(s) (ou colonne(s)) d'un dispositif de modulation spatiale d'intensité (420).

11. Dispositif de correction de front d'onde selon la revendication 7, dans lequel l'élément de filtrage comprend une fente fixe (510) et le dispositif de filtrage spatial comprend en outre un ensemble d'éléments optiques dont au moins un premier miroir (512, 522) mobile en rotation, et dans lequel :
- l'ensemble d'éléments optiques est configuré pour générer une image de fluorescence de la ligne de lumière sur la fente ; et
- les moyens de balayage sont configurés pour générer une rotation dudit au moins un premier miroir mobile, synchronisé avec le balayage de la ligne de lumière, pour superposer, à chaque instant, ladite fente et ladite image de fluorescence de la ligne de lumière.

12. Dispositif de correction de front d'onde selon l'une quelconque des revendications 8 à 11, dans lequel la largeur de la fente (40, 425, 510) est comprise entre une valeur minimale égale à deux fois la limite de diffraction de l'objectif de microscope d'imagerie multipliée par le grandissement optique entre le plan focal de l'objectif de microscope d'imagerie et le plan de filtrage dans lequel est agencée la fente, et une valeur maximale égale à la largeur de la zone de Rayleigh correspondant à un faisceau gaussien générant la ligne de lumière de fluorescence et multipliée par le grandissement optique entre le plan focal de l'objectif de microscope d'imagerie et le plan de filtrage dans lequel est agencée la fente.

13. Système d'imagerie microscopique (200) de fluorescence d'un objet volumique et fluorescent (10) avec éclairage par feuille de lumière comprenant :
- une voie d'imagerie (202) configurée pour la génération d'au moins une première image d'une section optique de l'objet dans une bande spectrale d'imagerie, ladite voie d'imagerie comprenant un objectif de microscope d'imagerie (210) avec une pupille dans un plan pupillaire (PP₁) et un détecteur d'imagerie (220) comprenant un plan de détection d'imagerie (PO₃), ladite section optique étant superposée à un plan focal (PO₁) dudit objectif de microscope d'imagerie;
- une voie d'éclairage de l'objet comprenant un dispositif d'éclairage (205) configuré pour le balayage d'une ligne de lumière dans un plan d'éclairage sensiblement perpendiculaire à l'axe optique de l'objectif de microscope d'imagerie pour générer une feuille de lumière (100), un plan focal (PO₁) dudit objectif de microscope d'imagerie étant compris dans ladite feuille de lumière, ladite feuille de lumière étant configurée pour générer une émission de lumière de fluorescence;
- une voie d'analyse et de correction (203) comprenant ledit objectif de microscope d'imagerie et un dispositif de correction de front d'onde (230) selon l'une quelconque des revendications 7 à 12, configuré pour la correction à partir de la carte bidimensionnelle d'un paramètre caractéristique du front d'onde, d'au moins une partie des défauts optiques entre ladite section optique de l'objet et ledit plan de détection d'imagerie (PP₁).

14. Système d'imagerie microscopique (200) de fluorescence selon la revendication 13, dans lequel le dispositif d'éclairage de la voie d'éclairage comprend un dispositif d'émission laser (310) pour l'émission d'un faisceau lumineux et un système optique d'éclairage avec un axe optique d'éclairage (Δ₁), le système optique d'éclairage étant configuré pour générer une ligne de lumière (341) à partir dudit faisceau lumineux parallèle à l'axe optique d'éclairage, la feuille de lumière (340) étant générée par balayage de la ligne de lumière dans une direction perpendiculaire à l'axe optique d'éclairage.

15. Système d'imagerie microscopique (200) de fluorescence selon la revendication 13, dans lequel le dispositif d'éclairage de la voie d'éclairage comprend un dispositif d'émission laser (310) pour l'émission d'un faisceau lumineux et un système optique d'éclairage avec un axe optique d'éclairage configuré pour générer une ligne de lumière (341) à partir dudit faisceau lumineux collimaté perpendiculaire à l'axe optique d'éclairage, la feuille de lumière étant générée par balayage de la ligne de lumière.

## Patentansprüche

1. Verfahren zur fluoreszenzmikroskopischen Abbildung eines volumetrischen und fluoreszierenden Objekts (10) mittels eines Systems (200) zur fluoreszenzmikroskopischen Abbildung mit Lichtblattbeleuchtung, wobei das System ein Mikroskop-Abbildungsobjektiv (210) mit einer Pupille (211) in einer Pupillenebene (PP1) und einer optischen Achse (D) aufweist, wobei das Verfahren die folgenden Schritte aufweist:
- Beleuchtung des Objekts mit einem Lichtblatt mittels eines Beleuchtungsstrahlengangs (201), der eine Beleuchtungsvorrichtung (205) aufweist, wobei die Beleuchtung die Erzeugung einer Lichtlinie und das Abtasten der Lichtlinie in einer Beleuchtungsebene im Wesentlichen senkrecht zu der optischen Achse des Mikroskop-Abbildungsobjektivs zum Erzeugen eines Lichtblatts (100) aufweist, wobei eine Fokusebene (PO1) des Mikroskop-Abbildungsobjektivs in dem Lichtblatt enthalten ist und das Lichtblatt eine Emission von Fluoreszenzlicht durch das Objekt erzeugt;
- Erzeugung, mittels eines Abbildungsstrahlengangs (202), der das Mikroskop-Abbildungsobjektiv (210) und einen Abbildungsdetektor (220) mit einer Abbildungsdetektionsebene (PO3) aufweist, mindestens eines ersten Fluoreszenzbildes eines optischen Schnitts des Objekts, der mit der Fokusebene (PO1) des Mikroskop-Abbildungsobjektivs überlagert ist, wobei das mindestens eine erste Fluoreszenzbild in einem Abbildungsspektralband erzeugt wird;
- Analyse einer Wellenfront des von dem Objekt emittierten Fluoreszenzlichts mittels eines Analysestrahlengangs (203), der das Mikroskop-Abbildungsobjektiv und eine Vorrichtung (240) zur Analyse einer Wellenfront aufweist, wobei die Vorrichtung zur Analyse einer Wellenfront einen zweidimensionalen Detektor (248) mit einer Analysedetektionsebene (PO4), die zu der Fokusebene des Mikroskop-Abbildungsobjektivs konjugiert ist, und eine zweidimensionale Anordnung (243) von Mikrolinsen (244), die in einer zu der Pupillenebene (PP1) konjugierten Analyseebene (PP3) angeordnet ist, aufweist, wobei die Analyse einer Wellenfront die folgenden Schritte aufweist:
- Erzeugung, durch jede Mikrolinse auf der Analysedetektionsebene, eines Fluoreszenzbildes eines gegebenen Analysefeldes des Objekts, das sich in einer Fokusebene (PO1) des Mikroskop-Abbildungsobjektivs befindet, wobei das Fluoreszenzbild in einem Analysespektralband erzeugt wird;
- räumliche Filterung des von dem Analysefeld emittierten Fluoreszenzlichts mittels einer räumlichen Filtervorrichtung (245), die ein in einer zu der Analysedetektionsebene (PO4) optisch konjugierten Filterebene angeordnetes Filterelement aufweist, wobei die räumliche Filterung ein Abtasten des Filterelements relativ zu einem in der Filterebene erzeugten Fluoreszenzbild der Lichtlinie, synchronisiert mit dem Abtasten der Lichtlinie, derart aufweist, dass zu jedem Zeitpunkt eine Überlagerung des Filterelements und des Fluoreszenzbildes der Lichtlinie erhalten wird;
- Verarbeitung der von den Mikrolinsen erzeugten Fluoreszenzbilder mittels einer Verarbeitungseinheit (250) zur Bestimmung einer zweidimensionalen Karte eines für die Wellenfront charakteristischen Parameters in der Analyseebene
- Korrektur, anhand der zweidimensionalen Karte eines für die Wellenfront charakteristischen Parameters, mindestens eines Teils der optischen Fehler zwischen dem optischen Schnitt des Objekts und der Abbildungsdetektionsebene (PP1), mittels einer Wellenfrontmodulationsvorrichtung (232), die eine zu der Pupillenebene (PP1) konjugierte Korrekturebene aufweist.

2. Verfahren zur fluoreszenzmikroskopischen Abbildung gemäß Anspruch 1, wobei das Filterelement einen beweglichen Spalt (40, 425) aufweist und die räumliche Filterung des von dem Analysefeld emittierten Fluoreszenzlichts eine Querbewegung des Spalts aufweist, die mit dem Abtasten der Lichtlinie synchronisiert ist.

3. Verfahren zur fluoreszenzmikroskopischen Abbildung gemäß Anspruch 1, wobei
- das Filterelement einen festen Spalt (510) aufweist und die räumliche Filtervorrichtung ferner eine Anordnung optischer Elemente aufweist, von denen mindestens ein erster Spiegel (512, 522) drehbeweglich ist, wobei die Anordnung optischer Elemente dazu konfiguriert ist, ein Fluoreszenzbild der Lichtlinie auf dem Spalt zu erzeugen, wobei die räumliche Filterung des von dem Analysefeld emittierten Fluoreszenzlichts aufweist:
- eine Drehung des mindestens einen ersten beweglichen Spiegels, die mit dem Abtasten der Lichtlinie synchronisiert ist, um zu jedem Zeitpunkt den Spalt und das Fluoreszenzbild der Lichtlinie zu überlagern.

4. Verfahren zur fluoreszenzmikroskopischen Abbildung gemäß einem der vorhergehenden Ansprüche, wobei die Beleuchtungsvorrichtung des Beleuchtungsstrahlengangs eine Laseremissionsvorrichtung (310) zum Emittieren eines Lichtstrahls und ein Beleuchtungsoptiksystem mit einer optischen Beleuchtungsachse (D1) aufweist, wobei das Beleuchtungsoptiksystem dazu konfiguriert ist, aus dem Lichtstrahl eine Lichtlinie (341) parallel zu der optischen Beleuchtungsachse zu erzeugen, wobei das Lichtblatt (340) durch Abtasten der Lichtlinie in einer zu der optischen Achse senkrechten Richtung erzeugt wird.

5. Verfahren zur fluoreszenzmikroskopischen Abbildung gemäß einem der Ansprüche 1 bis 3, wobei die Beleuchtungsvorrichtung des Beleuchtungsstrahlengangs eine Laseremissionsvorrichtung (310) zum Emittieren eines Lichtstrahls und ein Beleuchtungsoptiksystem mit einer optischen Beleuchtungsachse (D2) aufweist, das dazu konfiguriert ist, aus dem Lichtstrahl eine Lichtlinie (341) senkrecht zu der optischen Beleuchtungsachse zu erzeugen, wobei das Lichtblatt durch Abtasten der Lichtlinie erzeugt wird.

6. Verfahren zur fluoreszenzmikroskopischen Abbildung gemäß einem der vorhergehenden Ansprüche, wobei:
- die Bestimmung der zweidimensionalen Karte die Bestimmung von Positionsänderungen der von den Mikrolinsen erzeugten Fluoreszenzbilder aufweist, wobei die Positionsänderung eines von einer Mikrolinse erzeugten Fluoreszenzbildes relativ zu einer Referenzposition eines Referenzbildes gemessen wird, wobei die Positionsänderung durch eine Operation zwischen dem Bild und dem Referenzbild bestimmt wird, wobei die Operation ausgewählt ist aus: einer Kreuzkorrelation, einer Phasenkorrelation, einer Summe der quadrierten Differenzen.

7. Wellenfrontkorrekturvorrichtung (230), die dazu konfiguriert ist, zur Durchführung eines Verfahrens gemäß einem der Ansprüche 1 bis 6 mit einem System zur fluoreszenzmikroskopischen Abbildung mit Lichtblattbeleuchtung verbunden zu werden, wobei das System zur fluoreszenzmikroskopischen Abbildung einen Abbildungsstrahlengang aufweist, der ein Mikroskop-Abbildungsobjektiv (210) mit einer Pupille (211) in einer Pupillenebene (PP1) und einer optischen Achse (D) aufweist und einen Abbildungsdetektor mit einer Abbildungsdetektionsebene (PO3) aufweist, und einen Beleuchtungsstrahlengang aufweist, der eine Beleuchtungsvorrichtung (205) aufweist, die zum Abtasten einer Lichtlinie in einer Beleuchtungsebene im Wesentlichen senkrecht zu der optischen Achse zum Erzeugen eines Lichtblatts (100) konfiguriert ist, wobei die Wellenfrontkorrekturvorrichtung aufweist:
- eine Vorrichtung (240) zur Wellenfrontanalyse, aufweisend:
- einen zweidimensionalen Detektor (248), der eine Analysedetektionsebene (PO4) aufweist;
- eine zweidimensionale Anordnung (243) von Mikrolinsen (244), die in einer Analyseebene (PP3) angeordnet ist, wobei jede Mikrolinse dazu konfiguriert ist, auf der Analysedetektionsebene, wenn die Wellenfrontkorrekturvorrichtung mit dem mikroskopischen Abbildungssystem verbunden ist, ein Fluoreszenzbild eines gegebenen Analysefeldes des Objekts, das sich in einer Fokusebene (PO1) des Mikroskop-Abbildungsobjektivs befindet, zu erzeugen, wobei das Fluoreszenzbild in einem Analysespektralband erzeugt wird;
- eine räumliche Filtervorrichtung (245), die zur räumlichen Filterung des von dem Analysefeld emittierten Fluoreszenzlichts konfiguriert ist, wenn die Wellenfrontkorrekturvorrichtung mit dem mikroskopischen Abbildungssystem verbunden ist, wobei die räumliche Filtervorrichtung ein Filterelement, das in einer zu der Analysedetektionsebene (PO4) optisch konjugierten Filterebene (PO5, PO6) angeordnet ist, und Abtastmittel aufweist, die zum Abtasten des Filterelements relativ zu einem in der Filterebene erzeugten Fluoreszenzbild der Lichtlinie, synchronisiert mit dem Abtasten der Lichtlinie, derart konfiguriert sind, dass zu jedem Zeitpunkt eine Überlagerung des Filterelements und des Fluoreszenzbildes der Lichtlinie erhalten wird;
- eine Verarbeitungseinheit (250), die dazu konfiguriert ist, aus der Gesamtheit der von den Mikrolinsen erzeugten Bilder eine zweidimensionale Karte eines für die Wellenfront charakteristischen Parameters in der Analyseebene zu bestimmen; wobei die Wellenfrontkorrekturvorrichtung ferner aufweist:
- eine Wellenfrontmodulationsvorrichtung (232), die eine Korrekturebene (PP2) aufweist und dazu konfiguriert ist, anhand der zweidimensionalen Karte eines für die Wellenfront charakteristischen Parameters mindestens einen Teil der optischen Fehler zwischen dem optischen Schnitt des Objekts und der Abbildungsdetektionsebene (PO3) zu korrigieren, wenn die Wellenfrontkorrekturvorrichtung mit dem mikroskopischen Abbildungssystem verbunden ist;
- ein erstes optisches Relaissystem (231, 241, 242), das dazu konfiguriert ist, die Pupillenebene (PP1), die Korrekturebene (PP2) und die Analyseebene (PP3) optisch zu konjugieren, wenn die Wellenfrontkorrekturvorrichtung mit dem mikroskopischen Abbildungssystem verbunden ist;
- ein zweites optisches Relaissystem (231, 236, 241, 242), das dazu konfiguriert ist, die Fokusebene (PO1) des Mikroskop-Abbildungsobjektivs, die Analysedetektionsebene (PO4), die Abbildungsdetektionsebene (PO3) und die Filterebene (PO5, PO6) optisch zu konjugieren, wenn die Wellenfrontkorrekturvorrichtung mit dem mikroskopischen Abbildungssystem verbunden ist.

8. Wellenfrontkorrekturvorrichtung (230) gemäß Anspruch 7, wobei das Filterelement der konfokalen Filtervorrichtung einen beweglichen Spalt (40, 425) aufweist und die Abtastmittel dazu konfiguriert sind, eine Querbewegung des Spalts zu erzeugen, die mit dem Abtasten der Lichtlinie synchronisiert ist.

9. Wellenfrontkorrekturvorrichtung (230) gemäß Anspruch 8, wobei der bewegliche Spalt durch ein bewegliches optomechanisches Element (40) gebildet ist, das zur Transmission oder Reflexion des Fluoreszenzlichts konfiguriert ist.

10. Wellenfrontkorrekturvorrichtung (230) gemäß Anspruch 8, wobei der bewegliche Spalt durch die Adressierung einer Gruppe aus einer oder mehreren Zeile(n) (oder Spalte(n)) einer räumlichen Intensitätsmodulationsvorrichtung (420) gebildet ist.

11. Wellenfrontkorrekturvorrichtung gemäß Anspruch 7, wobei das Filterelement einen festen Spalt (510) aufweist und die räumliche Filtervorrichtung ferner eine Anordnung optischer Elemente aufweist, von denen mindestens ein erster Spiegel (512, 522) drehbeweglich ist, und wobei:
- die Anordnung optischer Elemente dazu konfiguriert ist, ein Fluoreszenzbild der Lichtlinie auf dem Spalt zu erzeugen; und
- die Abtastmittel dazu konfiguriert sind, eine Drehung des mindestens einen ersten beweglichen Spiegels zu erzeugen, die mit dem Abtasten der Lichtlinie synchronisiert ist, um zu jedem Zeitpunkt den Spalt und das Fluoreszenzbild der Lichtlinie zu überlagern.

12. Wellenfrontkorrekturvorrichtung gemäß einem der Ansprüche 8 bis 11, wobei die Breite des Spalts (40, 425, 510) zwischen einem Minimalwert, der dem Zweifachen der Beugungsgrenze des Mikroskop-Abbildungsobjektivs multipliziert mit dem optischen Abbildungsmaßstab zwischen der Fokusebene des Mikroskop-Abbildungsobjektivs und der Filterebene, in der der Spalt angeordnet ist, entspricht, und einem Maximalwert liegt, der der Breite des Rayleigh-Bereichs entsprechend einem Gaußschen Strahl, der die Fluoreszenzlichtlinie erzeugt, multipliziert mit dem optischen Abbildungsmaßstab zwischen der Fokusebene des Mikroskop-Abbildungsobjektivs und der Filterebene, in der der Spalt angeordnet ist, entspricht.

13. System (200) zur fluoreszenzmikroskopischen Abbildung eines volumetrischen und fluoreszierenden Objekts (10) mit Lichtblattbeleuchtung, aufweisend:
- einen Abbildungsstrahlengang (202), der zur Erzeugung mindestens eines ersten Bildes eines optischen Schnitts des Objekts in einem Abbildungsspektralband konfiguriert ist, wobei der Abbildungsstrahlengang ein Mikroskop-Abbildungsobjektiv (210) mit einer Pupille in einer Pupillenebene (PP1) und einen Abbildungsdetektor (220) mit einer Abbildungsdetektionsebene (PO3) aufweist, wobei der optische Schnitt mit einer Fokusebene (PO1) des Mikroskop-Abbildungsobjektivs überlagert ist;
- einen Beleuchtungsstrahlengang des Objekts, der eine Beleuchtungsvorrichtung (205) aufweist, die zum Abtasten einer Lichtlinie in einer Beleuchtungsebene im Wesentlichen senkrecht zu der optischen Achse des Mikroskop-Abbildungsobjektivs zum Erzeugen eines Lichtblatts (100) konfiguriert ist, wobei eine Fokusebene (PO1) des Mikroskop-Abbildungsobjektivs in dem Lichtblatt enthalten ist und das Lichtblatt dazu konfiguriert ist, eine Emission von Fluoreszenzlicht zu erzeugen;
- einen Analyse- und Korrekturstrahlengang (203), der das Mikroskop-Abbildungsobjektiv und eine Wellenfrontkorrekturvorrichtung (230) gemäß einem der Ansprüche 7 bis 12 aufweist, die dazu konfiguriert ist, anhand der zweidimensionalen Karte eines für die Wellenfront charakteristischen Parameters mindestens einen Teil der optischen Fehler zwischen dem optischen Schnitt des Objekts und der Abbildungsdetektionsebene (PP1) zu korrigieren.

14. System (200) zur fluoreszenzmikroskopischen Abbildung gemäß Anspruch 13, wobei die Beleuchtungsvorrichtung des Beleuchtungsstrahlengangs eine Laseremissionsvorrichtung (310) zum Emittieren eines Lichtstrahls und ein Beleuchtungsoptiksystem mit einer optischen Beleuchtungsachse (D1) aufweist, wobei das Beleuchtungsoptiksystem dazu konfiguriert ist, aus dem Lichtstrahl eine Lichtlinie (341) parallel zu der optischen Beleuchtungsachse zu erzeugen, wobei das Lichtblatt (340) durch Abtasten der Lichtlinie in einer Richtung senkrecht zu der optischen Beleuchtungsachse erzeugt wird.

15. System (200) zur fluoreszenzmikroskopischen Abbildung gemäß Anspruch 13, wobei die Beleuchtungsvorrichtung des Beleuchtungsstrahlengangs eine Laseremissionsvorrichtung (310) zum Emittieren eines Lichtstrahls und ein Beleuchtungsoptiksystem mit einer optischen Beleuchtungsachse aufweist, das dazu konfiguriert ist, aus dem kollimierten Lichtstrahl eine Lichtlinie (341) senkrecht zu der optischen Beleuchtungsachse zu erzeugen, wobei das Lichtblatt durch Abtasten der Lichtlinie erzeugt wird.

## Claims

1. A method for fluorescence microscopy imaging of a volumetric and fluorescent object (10) by means of a fluorescence microscopy imaging system (200) with light sheet illumination, with said system comprising an imaging microscope objective lens (210) with a pupil (211) in a pupil plane (PP₁) and an optical axis (Δ), the method comprising:
- illuminating the object with a light sheet through an illumination path (201) comprising an illumination device (205), wherein illuminating comprises generating a line of light and scanning the line of light in an illumination plane substantially perpendicular to the optical axis of the imaging microscope objective lens in order to generate a light sheet (100), wherein a focal plane (PO₁) of said imaging microscope objective lens is included in said light sheet and wherein said light sheet generates an emission of fluorescence light by the object;
- generating, through an imaging path (202) comprising said imaging microscope objective lens (210) and an imaging detector (220) comprising an imaging detection plane (PO₃), at least one first fluorescence image of an optical section of the object superimposed on the focal plane (PO₁) of said imaging microscope objective lens, wherein said at least one first fluorescence image is generated in a spectral imaging band;
- analyzing a wavefront of the fluorescence light emitted by the object through an analysis path (203) comprising said imaging microscope objective lens and a wavefront analysis device (240), wherein the wavefront analysis device comprises a two-dimensional detector (248) with an analysis detection plane (PO₄) conjugate with said focal plane of the imaging microscope objective lens and a two-dimensional arrangement (243) of microlenses (244), arranged in an analysis plane (PP₃) conjugate with said pupil plane (PP₁), and wherein analyzing the wavefront comprises:
- each microlens generating, on the analysis detection plane, a fluorescence image of a given analysis field of the object, located in a focal plane (PO₁) of the imaging microscope objective lens, wherein said fluorescence image is generated in a spectral analysis band;
- spatially filtering the fluorescence light emitted by said analysis field by means of a spatial filtering device (245) comprising a filtering element arranged in a filtering plane optically conjugate with the analysis detection plane (PO₄), wherein the spatial filtering comprises a scan of said filtering element relative to a fluorescence image of said line of light formed in said filtering plane, synchronized with said scan of the line of light, so as to obtain a superposition of said filtering element and of said fluorescence image of the line of light at each instant;
- processing the fluorescence images generated by the microlenses by means of a processing unit (250) in order to determine a two-dimensional map of a characteristic parameter of the wavefront in said analysis plane;
- correcting, based on the two-dimensional map of a characteristic parameter of the wavefront, at least a portion of the optical defects between said optical section of the object and said imaging detection plane (PP₁), by means of a wavefront modulation device (232) comprising a correction plane conjugate with the pupil plane (PP₁).

2. The fluorescence microscopy imaging method as claimed in claim 1, wherein the filtering element comprises a movable slit (40, 425) and the spatial filtering of the fluorescence light emitted by said analysis field comprises a transverse movement of said slit, synchronized with the scan of the line of light.

3. The fluorescence microscopy imaging method as claimed in claim 1, wherein:
- the filtering element comprises a fixed slit (510) and the spatial filtering device further comprises a set of optical components including at least one first rotatable mirror (512, 522), wherein the set of optical components is configured to generate a fluorescence image of the line of light on the slit, and wherein the spatial filtering of the fluorescence light emitted by said analysis field comprises:
- rotating said at least one first movable mirror, synchronized with the scan of the line of light, in order to superimpose said slit and said fluorescence image of said line of light at each instant.

4. The fluorescence microscopy imaging method as claimed in any one of the preceding claims, wherein the device for illuminating the illumination path comprises a laser emitting device (310) for emitting a light beam and an optical illumination system with an optical illumination axis (Δ₁), wherein the optical illumination system is configured to generate a line of light (341) from said light beam parallel to the optical illumination axis, and wherein the light sheet (340) is generated by scanning the line of light in a direction perpendicular to the optical axis.

5. The fluorescence microscopy imaging method as claimed in any one of claims 1 to 3, wherein the device for illuminating the illumination path comprises a laser emitting device (310) for emitting a light beam and an optical illumination system with an optical illumination axis (Δ₂) configured to generate a line of light (341) from said light beam perpendicular to the optical illumination axis, with the light sheet being generated by scanning the line of light.

6. The fluorescence microscopy imaging method as claimed in any one of the preceding claims, wherein:
- determining said two-dimensional map comprises determining variations in the positions of the fluorescence images formed by the microlenses, wherein the variation in position of a fluorescence image formed by a microlens is measured relative to a reference position of a reference image, wherein the variation in position is determined by an operation between said image and said reference image, and wherein said operation is selected from among: an intercorrelation, a phase correlation, a sum of squared differences operation.

7. A wavefront correction device (230), configured to be connected to a fluorescence microscopy imaging system with light sheet illumination for implementing a method as claimed in any one of claims 1 to 6, said fluorescence microscopy imaging system comprising an imaging path comprising an imaging microscope objective lens (210) with a pupil (211) in a pupil plane (PP₁) and an optical axis (Δ), and comprising an imaging detector with an imaging detection plane (PO₃), and an illumination path comprising an illumination device (205) configured to scan a line of light in an illumination plane substantially perpendicular to the optical axis in order to generate a light sheet (100), wherein the wavefront correction device comprises:
- a wavefront analysis device (240) comprising:
- a two-dimensional detector (248) comprising an analysis detection plane (PO₄);
- a two-dimensional arrangement (243) of microlenses (244), arranged in an analysis plane (PP₃), with each microlens being configured to generate, on the analysis detection plane when the wavefront correction device is connected to the microscopy imaging system, a fluorescence image of a given analysis field of the object located in a focal plane (PO₁) of the imaging microscope objective lens, with said fluorescence image being generated in a spectral analysis band;
- a spatial filtering device (245) configured to spatially filter fluorescence light emitted by said analysis field when the wavefront correction device is connected to the microscopy imaging system, wherein the spatial filtering device comprises a filtering element arranged in a filtering plane (PO₅, PO₆) optically conjugate with the analysis detection plane (PO₄) and scanning means configured to scan said filtering element relative to a fluorescence image of said line of light formed in said filtering plane, synchronized with said scan of the line of light, so as to obtain a superposition of said filtering element and of said fluorescence image of the line of light at each instant;
- a processing unit (250) configured to determine a two-dimensional map of a characteristic parameter of the wavefront in said analysis plane based on all the images formed by the microlenses; wherein the wavefront correction device further comprises:
- a wavefront modulation device (232) comprising a correction plane (PP₂), configured to correct at least a portion of the optical defects between said optical section of the object and said imaging detection plane (PO₃) based on the two-dimensional map of a characteristic parameter of the wavefront when the wavefront correction device is connected to the microscopy imaging system;
- a first optical relay system (231, 241, 242) configured to optically conjugate the pupil plane (PP₁), the correction plane (PP₂) and the analysis plane (PP₃) when the wavefront correction device is connected to the microscopy imaging system;
- a second optical relay system (231, 236, 241, 242) configured to optically conjugate the focal plane (PO₁) of the imaging microscope objective lens, the analysis detection plane (PO₄), the imaging detection plane (PO₃) and the filtering plane (PO₅, PO₆) when the wavefront correction device is connected to the microscopy imaging system.

8. The wavefront correction device (230) as claimed in claim 7, wherein the filtering element of the confocal filtering device comprises a movable slit (40, 425), and the scanning means are configured to generate a transverse movement of said slit, synchronized with the scan of the line of light.

9. The wavefront correction device (230) as claimed in claim 8, wherein said movable slit is formed by a movable optomechanical element (40) configured to transmit or reflect fluorescence light.

10. The wavefront correction device (230) as claimed in claim 8, wherein said movable slit is formed by addressing a group of one or more rows (or columns) of a spatial intensity modulation device (420).

11. The wavefront correction device as claimed in claim 7, wherein the filtering element comprises a fixed slit (510) and the spatial filtering device further comprises a set of optical components including at least one first rotatable mirror (512, 522), and wherein:
- the set of optical components is configured to generate a fluorescence image of the line of light on the slit; and
- the scanning means are configured to generate a rotation of at least one first movable mirror, synchronized with the scan of the line of light, in order to superimpose said slit and said fluorescence image of said line of light at each instant.

12. The wavefront correction device as claimed in any one of claims 8 to 11, wherein the width of the slit (40, 425, 510) ranges between a minimum value equal to twice the diffraction limit of the imaging microscope objective lens multiplied by the optical magnification between the focal plane of the imaging microscope objective lens and the filtering plane in which the slit is arranged, and a maximum value equal to the width of the Rayleigh range corresponding to a Gaussian beam generating the fluorescence line of light and multiplied by the optical magnification between the focal plane of the imaging microscope objective lens and the filtering plane in which the slit is arranged.

13. A fluorescence microscopy imaging system (200) for a volumetric and fluorescent object (10) with light sheet illumination comprising:
- an imaging path (202) configured to generate at least one first image of an optical section of the object in a spectral imaging band, wherein said imaging path comprises an imaging microscope objective lens (210) with a pupil in a pupil plane (PP₁) and an imaging detector (220) comprising an imaging detection plane (PO₃), and wherein said optical section is superimposed on a focal plane (PO₁) of said imaging microscope objective lens;
- an illumination path of the object comprising an illumination device (205) configured to scan a line of light in an illumination plane substantially perpendicular to the optical axis of the imaging microscope objective lens in order to generate a light sheet (100), wherein a focal plane (PO₁) of said imaging microscope objective lens is included in said light sheet, and wherein said light sheet is configured to generate an emission of fluorescence light;
- an analysis and correction path (203) comprising said imaging microscope objective lens and a wavefront correction device (230) as claimed in any one of claims 7 to 12, configured to correct at least a portion of the optical defects between said optical section of the object and said imaging detection plane (PP₁) based on the two-dimensional map of a characteristic parameter of the wavefront.

14. The fluorescence microscopy imaging system (200) as claimed in claim 13, wherein the device for illuminating the illumination path comprises a laser emitting device (310) for emitting a light beam and an optical illumination system with an optical illumination axis (Δ₁), wherein the optical illumination system is configured to generate a line of light (341) from said light beam parallel to the optical illumination axis, and wherein the light sheet (340) is generated by scanning the line of light in a direction perpendicular to the optical illumination axis.

15. The fluorescence microscopy imaging system (200) as claimed in claim 13, wherein the device for illuminating the illumination path comprises a laser emitting device (310) for emitting a light beam and an optical illumination system with an optical illumination axis configured to generate a line of light (341) from said collimated light beam perpendicular to the optical illumination axis, with the light sheet being generated by scanning the line of light.
